# EUROPEAN PATENT APPLICATION

(11) **EP 3 591 756 A1**
(43) Date of publication of application: **08.01.2020**
(21) Application number: 18760814.6
(22) Date of filing: 01.03.2018
(51) Int. Cl.: H01M 10/44, H01M 2/10, H01M 4/58, H01M 4/587, H01M 10/0525, H01M 10/613, H01M 10/643, H01M 10/6557, H01M 10/6563, H02J 7/00, H02J 7/02, B60L 11/18

(54) **CHARGING APPARATUS**

(30) Priority: 01.03.2017 JP 2017038281
(71) Applicant: Yamaha Hatsudoki Kabushiki Kaisha, Iwata-shi, Shizuoka 438-8501 (JP)
(72) Inventor: NAKAMURA, Hitoshi, Iwata-shi Shizuoka 438-8501 (JP); KONDO, Mitsuo, Iwata-shi Shizuoka 438-8501 (JP)
(74) Representative: Stöckeler, Ferdinand
(86) International application number: PCT/JP2018/007795
(87) International publication number: WO 2018/159762

(57) **Abstract**

The charging apparatus (10) includes a power receiving unit (12), power output units (14), a power storage unit (16), and a control unit (18). The power storage unit (16) includes lithium ion cells (161) connected in series and in parallel. The control unit (18) is configured to supply electric power that the power receiving unit (12) receives from an AC power source (20) to the lithium ion cells (161), and output the electric power stored in the lithium ion cells (161) from the power output unit (14) to which an external power storage apparatus (22) is connected. Each of the lithium ion cells (161) includes one cathode including a cathode active material which has an olivine structure and one anode including an anode active material which has laminated carbon layers 16121a, 16121b, and 16121c in which an average interlayer distance between the carbon layers is equal to or longer than the diameter of a lithium atom.

## Description

### [Technical Field]

The present invention relates to a charging apparatus.

### [Background Art]

A motor-driven vehicle such as an electric vehicle and a hybrid vehicle is charged at a charging facility such as a gas station (filing station). At the charging facility, an external power storage apparatus (e.g., a battery) of the motor-driven vehicle is charged.

In accordance with the popularization of electric vehicles, the demand for charging facilities increases. A charging facility is required to quickly charge plural motor-driven vehicles simultaneously. The charging facility is further required to quickly charge plural motor-driven vehicles successively. A large amount of electric power is required to meet these requirements.

Patent Literature 1, for example, proposes a charging apparatus which is capable of charging plural electric vehicles. To the charging apparatus of Patent Literature 1, a large amount of electric power is supplied from a DC power supply system of an electric railway which has been stably run.

### [Citation List]

### [Patent Literatures]

[Patent Literature 1] International Publication No. 2013/180324

### [Summary of Invention]

### [Technical Problem]

The charging apparatus of Patent Literature 1, however, can be installed only within a range in which electric power can be supplied from the DC power supply system of the electric railway. The location of the charging apparatus is therefore significantly limited as compared to existing gas stations.

An object of the present teaching is to provide a charging apparatus which is able to quickly charge plural external power storage apparatuses simultaneously, is able to quickly charge plural external power storage apparatuses successively, and is less limited in the installation location.

### [Solution to Problem]

In order to improve the degree of freedom in the installation location of a charging apparatus, to begin with, the inventor of the subject application considered in detail a state of quick charge of plural motor-driven vehicles simultaneously and a state of quick charge of plural motor-driven vehicles successively by a charging apparatus fixed to the ground such as a gas station.

As a result of the consideration, it was confirmed that a large amount of electric power was continuously required in both of these states. However, as a result of consideration of the state of use in 24 hours in detail, it was found that there were a time period in which a large amount of electric power was required and a time period in which electric power was scarcely required. Furthermore, it was found that, when the charging apparatus was fixed to the ground such as a gas station, an amount of required electric power was predictable depending on the installation location of the charging apparatus. This holds true for not only cases where motor-driven vehicles are charged by the charging apparatus, but also cases where apparatuses other than the motor-driven vehicles are charged by the charging apparatus.

Under this circumstance, the inventor of the subject application conceived of providing a power storage unit capable of storing a large amount of electric power in a charging apparatus fixed to the ground. The output and capacity of lithium ion cells have recently been increased. The inventor therefore conceived of using plural lithium ion cells in combination, as the power storage unit of the charging apparatus. Electric power supplied at one time from the charging apparatus including the power storage unit is only electric power stored in the power storage unit. In other words, the capability of successively supplying electric power by the charging apparatus including the power storage unit is limited. However, because the charging apparatus has a time period in which supply of electric power is scarcely required, the power storage unit can be charged in this time period. Furthermore, because an amount of electric power required by the charging apparatus is predictable depending on the installation location of the charging apparatus, it is possible to provide a power storage unit, which has a capacity corresponding to the amount of the required electric power. Because the charging apparatus includes the power storage unit, it is unnecessary to provide the charging apparatus at a location close to a facility capable of supplying a large amount of electric power, such as a DC power supply system of an electric railway. This increases the degree of freedom in the installation location of the charging apparatus.

It has also been found that the power storage unit requires a large number of lithium ion cells in order to store a large amount of electric power for simultaneously charging plural external power storage apparatuses and for successively charging the plural external power storage apparatuses. The reason of this is as follows.

In order to accumulate a large amount of electric power for simultaneously charging plural external power storage apparatuses and for successively charging the plural external power storage apparatuses, it is necessary to arrange the power storage unit to be able to output a high current value and a high voltage value. How the current value and the voltage value that the power storage unit is able to output can be increased is considered. To increase the current value that the power storage unit is able to output, it is necessary to increase the number of lithium ion cells connected in parallel. To increase the voltage value that the power storage unit is able to output, it is necessary to increase the number of lithium ion cells connected in series. As such, in order to increase the current value and the voltage value that the power storage unit is able to output, it is necessary to increase the number of lithium ion cells included in the power storage unit.

When a charging apparatus is fixed to the ground such as a gas station, a large-scaled facility is required. In order to recoup the investment, such a charging apparatus fixed to the ground is desired to be active for a long time (e.g., 20 years or more) without maintenance as much as possible. On this account, long term use of the charging apparatus in which the power storage unit was constituted by plural lithium ion cells was scrutinized. As a result, it was found that the deterioration of the lithium ion cells of the power storage unit was a problem. The reason of this is as follows.

To begin with, a state of simultaneously quick charging of plural external power storage apparatuses is considered. In this state, the power storage unit discharges a significantly large amount of electric power in a short time. When the charging apparatus is used for a long time, such discharges of a significantly large amount of electric power in a short time is repeated. As a result, the lithium ion cells in the power storage unit deteriorate.

In addition to the above, a state of successive quick charge of plural external power storage apparatuses was considered. In this state, the power storage unit of the charging apparatus discharges a large amount of electric power successively. When the charging apparatus is used for a long time, such successive discharge of a large amount of electric power is repeated. As a result, the lithium ion cells in the power storage unit deteriorate.

When the variation range of the SOC (State of Charge) of the lithium ion cells is narrow, deterioration of the lithium ion cells is suppressed. To narrow the variation range of the SOC of each of the lithium ion cells in the power storage unit, it is necessary to increase the number of lithium ion cells connected in parallel. In other words, to suppress the deterioration of the lithium ion cells in the power storage unit, it is necessary to increase the number of lithium ion cells included in the power storage unit.

When plural lithium ion cells are used as the power storage unit of the charging apparatus, the deterioration of the lithium ion cells must be suppressed to achieve quick charge of plural external power storage apparatuses simultaneously and quick charge of plural external power storage apparatuses successively, over a long period of time. To suppress the deterioration of the lithium ion cells, it has been found that a large number of lithium ion cells are required in the power storage unit. It has also been found that the power storage unit requires a large number of lithium ion cells in order to store a large amount of electric power for simultaneously charging plural external power storage apparatuses and for successively charging the plural external power storage apparatuses.

As the number of lithium ion cells in the power storage unit is increased, the weight of the power storage unit is increased. The inventor of the subject application further considered in detail about the charging apparatus fixed to the ground such as a gas station. As a result, the following was found.

When the charging apparatus is fixed not to a mobile member but to the ground, the power storage unit rarely moves. The increase in weight of the power storage unit due to the increase in the number of the lithium ion cells is therefore unlikely to be a problem. Furthermore, the increase in the number of the lithium ion cells is allowable to some degree. Because the charging apparatus fixed to the ground such as a gas station is desired to be active for a long time without maintenance as much as possible, lithium ion cells not having large output and large capacity, but lithium ion cells which are less likely to be deteriorated after repeated charging and discharging are suitable as lithium ion cells used in the power storage unit.

Based on these findings, the inventor of the subject application has developed a lithium ion cell suitable for a charging apparatus fixed to the ground such as a gas station. A cathode (positive electrode) of this lithium ion cell includes a cathode active material (positive electrode active material) with an olivine structure. An anode (negative electrode) of the lithium ion cell includes an anode active material (negative electrode active material) which includes plural laminated carbon layers in which an average interlayer distance between the carbon layers is equal to or longer than the diameter of a lithium atom.

The output voltage of the newly-developed lithium ion cell is not very high. However, the voltage that the power storage unit can output is easily increased by increasing the number of lithium ion cells connected in series in the power storage unit. Furthermore, the output current of the newly-developed lithium ion cell can be increased. Furthermore, the newly-developed lithium ion cell is less likely to be deteriorated even in a state in which the variation width of the SOC is wide. Furthermore, the newly-developed lithium ion cell is less likely to be deteriorated even after charging and discharging are repeated. It is therefore possible to avoid the deterioration of the battery characteristics of the power storage unit for a long time, without increasing the number of lithium ion cells.

For the reasons above, the newly-developed charging apparatus including the power storage unit in which plural lithium ion cells are combined is able to quickly charge plural external power storage apparatuses simultaneously, is able to quickly charge plural external power storage apparatuses successively, and is less limited in the installation location. Because the degree of freedom in the installation location is high, the charging apparatus can be used as a charging apparatus fixed to the ground. Furthermore, the charging apparatus can be used as a movable charging apparatus which is not fixed to the ground.

Based on the findings above, the inventors of the subject application completed the present teaching. The following will describe the present teaching.

(1) A charging apparatus of the present teaching includes: a power receiving unit which is electrically connectable to an AC power source and is configured to receive electric power from the AC power source; a power storage unit which includes lithium ion cells connected in series and in parallel and is configured to charge the lithium ion cells by the electric power received by the power receiving unit; power output units which are able to simultaneously supply the electric power charged in the lithium ion cells to plural external power storage apparatuses each of which is capable of storing electric power, when the power output units are electrically connected to the external power storage apparatuses, respectively; and a control unit which is configured to charge the lithium ion cells by supplying the electric power that the power receiving unit receives from the AC power source to the lithium ion cells, and output the electric power stored in the lithium ion cells from at least one of the power output units which is connected to at least one of the external power storage apparatuses. Each of the lithium ion cells includes: one cathode which includes a cathode active material having an olivine structure; and one anode which includes an anode active material having laminated carbon layers, an average interlayer distance between the carbon layers being equal to or longer than the diameter of a lithium atom.

With this arrangement, because the cathode of each lithium ion cell includes the cathode active material having the olivine structure, the output current of the lithium ion cell is large. The output current of the power storage unit can be further increased by connecting lithium ion cells in parallel. Furthermore, the output voltage of the power storage unit can be easily increased by connecting lithium ion cells in series. The power storage unit including the lithium ion cells connected in series and in parallel can therefore store a large amount of electric power. The power storage unit is charged with the electric power that the power receiving unit receives from the AC power source. The power storage unit is therefore able to store a large amount of electric power that the power receiving unit receives from the AC power source. On this account, it is unnecessary to provide the charging apparatus in the vicinity of a power supply facility which is capable of supplying a large amount of electric power. The degree of freedom in installation location of the charging apparatus is therefore improved.

Furthermore, because the cathode of each lithium ion cell includes the cathode active material having the olivine structure, the lithium ion cell is less likely to be deteriorated even after charging and discharging are repeated.

Furthermore, the olivine structure of the cathode active material is a hexagonal close-packed structure and is a stable crystal structure. The metal casing cell (lithium ion cell) with the arrangement above can therefore be used under high temperature environments.

In addition to the above, the power receiving unit is electrically connected to the AC power source. The power receiving unit receives electric power from the AC power source. The AC power source is, for example, an AC power source to which an alternating current is supplied from a power station via a cable. The AC power source is, for example, a commercial power source to which an alternating current is supplied from a power station via a cable. Commercial power sources are available at many locations. The degree of freedom in installation location of the charging apparatus is therefore improved. The AC power source may be a movable AC power generator, for example. The AC power source may be connected to a movable AC power generator, for example. The degree of freedom in installation location of the charging apparatus is also improved in these cases.

The control unit is configured to charge the lithium ion cells by supplying the electric power that the power receiving unit receives from the AC power source to the lithium ion cells, and output the electric power stored in the lithium ion cells from a power output unit to an external power storage apparatus connected to the power output unit. In short, charging and discharging of the lithium ion cells are controlled by the control unit.

When the lithium ion cell is charged, lithium ions move from the cathode to the anode, and enter the space between neighboring carbon layers. Meanwhile, when the lithium ion cell is discharged, lithium ions leave the space between neighboring carbon layers and move to the cathode.

The inventors of the subject application found the following matters when an anode active material including laminated graphite layers was used for the anode of the lithium ion cell. When an anode active material including laminated graphite layers is used for the anode of the lithium ion cell, the interlayer distance between the graphite layers is shorter than the diameter of a lithium atom in the anode. On this account, when lithium ions enter the space between neighboring graphite layers of the anode in the charging of the lithium ion cell, the space between the graphite layers is widened. Meanwhile, when the lithium ions leave the space between the graphite layers in the discharging of the lithium ion cell, the space between the graphite layers is narrowed. As such, when the charging and discharging of the lithium ion cell are repeated, the lithium ions repeatedly enter and leave from the space between the graphite layers, and hence the gap between the graphite layers is repeatedly widened and narrowed. As a result, the state of lamination of the graphite layers is changed. The inventors have found that this greatly changes the crystal structure of the anode. The inventors have found that this is a factor of the anode deterioration.

As the anode active material of the lithium ion cell, the inventors of the subject application used an anode active material having carbon layers, in which an average interlayer distance between the carbon layers was equal to or longer than the diameter of a lithium atom. With this anode active material, the crystal structure of the anode was less changed after the charging and the discharging of the lithium ion cell were repeated.

To be more specific, in the anode of the lithium ion cell, an average interlayer distance between the carbon layers is equal to or longer than the diameter of a lithium ion. On this account, when the lithium ion cell is charged, the space between neighboring carbon layers of the anode is scarcely widened even though lithium ions enter the space between the neighboring carbon layers. Furthermore, the distance between the neighboring carbon layers is scarcely changed even after the lithium ions leave the space between the neighboring carbon layers in the discharging of the lithium ion cell. In short, the average interlayer distance between the carbon layers is scarcely changed even though lithium ions enter and leave the space between the carbon layers when the lithium ion cell is charged and discharged. The state of lamination of the carbon layers is therefore scarcely changed. As a result, the crystalline structure of the anode is not changed so much. The lithium ion cell is therefore less likely to be deteriorated even after charging and discharging of the lithium ion cell are repeated.

When the output current of the lithium ion cell is large, the variation width of the SOC of the lithium ion cell is wide. In the lithium ion cell, the cathode active material has the olivine structure, and the anode active material includes the laminated carbon layers and an average interlayer distance of the carbon layers is equal to or longer than the diameter of a lithium atom. On this account, the lithium ion cell is less likely to be deteriorated even in the state that the variation width of the SOC of the lithium ion cell is wide. Furthermore, because the lithium ion cell is less likely to be deteriorated even after charging and discharging are repeated as described above, plural external power storage apparatuses can be quickly charged simultaneously and plural external power storage apparatuses can be quickly charged successively.

Because of the above, the charging apparatus of the present teaching is able to quickly charge plural external power storage apparatuses simultaneously, is able to quickly charge plural external power storage apparatuses successively, and is less restricted in the installation location.
(2) According to an aspect of the present teaching, the charging apparatus of the present teaching preferably includes the following arrangement, in addition to the arrangement (1). Each of the lithium ion cells is a metal casing cell including: an electrolyte solution or a solid electrolyte; and a casing made of metal, in which the cathode, the anode, and one of the electrolyte solution and the solid electrolyte are housed.
   When the lithium ion cells are charged or discharged, each of the lithium ion cells radiates heat. When the plural external power storage apparatuses are quickly charged simultaneously, an amount of heat generated by each lithium ion cell is large because a large current is discharged from the lithium ion cells. Likewise, when the plural external power storage apparatuses are quickly charged successively, an amount of heat generated by each lithium ion cell is large because a large current is discharged from the lithium ion cells. Each lithium ion cell is a metal casing cell in which a cathode, an anode, and an electrolyte are housed in a casing made of metal. The casing made of metal has high heat dissipation. On this account, even though each of the metal casing cells radiates heat when the metal casing cells are charged or discharged, each of the metal casing cells dissipates the heat. It is therefore possible to suppress the increase in temperature of the metal casing cells even when a large current is discharged and an amount of generated heat is large. The deterioration of the metal casing cells is therefore suppressed. As a result, the plural external power storage apparatuses can be quickly charged simultaneously and the external power storage apparatuses can be quickly and successively charged for a longer time.
   Furthermore, because the electrolyte solution is housed in the casing made of metal, the casing made of metal does not swell even when the electrolyte solution is volatile. It is therefore possible to use a highly volatile electrolyte solution as the electrolyte solution. Such a highly volatile electrolyte solution is less likely to be solidified or frozen at a low temperature. When the electrolyte solution is less likely to be solidified or frozen at a low temperature, the lithium ion cells can be used in a low-temperature environment. This allows the metal casing cells (lithium ion cells) to be used in wider environments. The degree of freedom in installation location of the charging apparatus is therefore further improved.
(3) According to an aspect of the present teaching, the charging apparatus of the present teaching preferably includes the following arrangement, in addition to the arrangement (2). The power storage unit includes a metal casing cell fixing member which fixes the metal casing cells to one another.
   With this arrangement, the metal casing cells can be fixed to one another by the metal casing cell fixing member. As a result, the metal casing cells can be maintained to be connected in series and in parallel. Furthermore, the metal casing cells can be integrated. This makes it easy to move the metal casing cells together. As a result, the power storage unit can be handled easily. The degree of freedom in installation location of the charging apparatus is therefore further improved.
   In addition to the above, the positions of the metal casing cells are maintained with a layout which takes into account the heat dissipation of the metal casing cells. For example, the metal casing cells can be maintained with a suitable gap therebetween. With this, when the metal casing cells are charged or discharged, temperature increase of the metal casing cells is suppressed even if the metal casing cells generate heat. This makes it possible to further suppress the deterioration of the metal casing cell (lithium ion cell). The deterioration of the metal casing cells is therefore suppressed. As a result, the plural external power storage apparatuses can be quickly charged simultaneously and the external power storage apparatuses can be quickly and successively charged for a longer time.
(4) According to an aspect of the present teaching, the charging apparatus of the present teaching preferably includes the following arrangement, in addition to the arrangement (3). The metal casing cell fixing member fixes the metal casing cells to one another while a space is formed between neighboring metal casing cells.
   When the metal casing cell is charged or discharged, the metal casing cell generates heat. With the arrangement above, because the space is formed between the neighboring metal casing cells, the generated heat can be moved to this space. Furthermore, because the casing of the metal casing cell is made of metal, the metal casing cell has high heat dissipation. For these reasons, when the metal casing cells are charged or discharged, temperature increase of the metal casing cells is suppressed. The deterioration of the metal casing cells is therefore suppressed. As a result, the plural external power storage apparatuses can be quickly charged simultaneously and the external power storage apparatuses can be quickly and successively charged, for a longer time.
(5) According to an aspect of the present teaching, the charging apparatus of the present teaching preferably includes the following arrangement, in addition to the arrangement (3) or (4). The power storage unit includes a housing member which houses the metal casing cells and the metal casing cell fixing member.
   With this arrangement, the housing member of the power storage unit houses the metal casing cells and the metal casing cell fixing unit. The metal casing cells are therefore protected from water and moisture. This makes it possible to suppress the deterioration of the metal casing cell (lithium ion cell). As a result, the plural external power storage apparatuses can be quickly charged simultaneously and the plural external power storage apparatuses can be quickly and successively charged for a longer time.
(6) According to an aspect of the present teaching, the charging apparatus of the present teaching preferably includes the following arrangement, in addition to any one of the arrangements (2) to (4). The power storage unit includes a temperature adjuster which is configured to adjust the temperature of the space formed between the neighboring metal casing cells.
   With this arrangement, the temperature of the space between the neighboring metal casing cells is adjustable by the temperature adjuster. Due to this, when the metal casing cells are charged or discharged, temperature increase of the metal casing cells can be further suppressed.
(7) According to an aspect of the present teaching, the charging apparatus of the present teaching preferably includes the following arrangement, in addition to the arrangement (5). The power storage unit includes a temperature adjuster, which is configured to adjust the temperature of the space formed between the neighboring metal casing cells, and the temperature adjuster is provided inside the housing member.
   When the metal casing cells are housed in the housing member, heat from the metal casing cells does not easily escape to the outside. On this account, if no temperature adjuster is provided, it would be difficult to suppress the temperature increase of the metal casing cells. The temperature inside the housing member tends to increase for this reason. In this regard, when the temperature adjuster is provided inside the housing member, the temperature increase of the metal casing cells is suppressed and the temperature increase inside the housing member housing the lithium ion cells is suppressed by the temperature adjuster. It is therefore possible to suppress the temperature increase of other members housed in the housing member. As a result, it is possible to suppress, for example, an influence of the temperature increase on other members housed in the housing member.
   Due to this, the plural external power storage apparatuses can be quickly charged simultaneously and the plural external power storage apparatuses can be quickly and successively charged for a longer time.
(8) According to an aspect of the present teaching, the charging apparatus of the present teaching preferably includes the following arrangement, in addition to any one of the arrangements (1) to (7). The charging apparatus can be fixed to the ground.
(9) According to an aspect of the present teaching, the charging apparatus of the present teaching preferably includes the following arrangement, in addition to the arrangement (8). At least part of each of the lithium ion cells is provided below a land surface in a vertical direction.

Underground temperature does not change so much as compared to overground temperature. Furthermore, underground temperature is less likely to be extremely high or low as compared to overground temperature. The underground is therefore less susceptible to an influence of ambient temperatures. In the arrangement above, at least part of each of the lithium ion cells is provided underground. The underground part of each of the lithium ion cells is less susceptible to an influence of ambient temperatures. This makes it possible to suppress the deterioration of each the lithium ion cells. On this account, the plural charging apparatus is able to quickly charge the external power storage apparatuses simultaneously and able to quickly charge the plural external power storage apparatuses successively for a longer time.

### <Definitions of Terms>

In the present teaching, an "AC power source" is a power source capable of supplying an alternating current. The AC power source may receive an alternating current from a power station via a cable, etc., for example. The AC power source may be an AC power generator, for example. The AC power source may be connected to an AC power generator, for example.

In the present teaching, the phrase "a power storage unit including plural lithium ion cells connected in series and in parallel" indicates that at least two of the lithium ion cells of the power storage unit are connected in series and at least two of the lithium ion cells of the power storage unit are connected in parallel. At least one of the lithium ion cells connected in series may be connected in parallel to another lithium ion cell included in the power storage unit. At least one of the lithium ion cells connected in parallel may be connected in series to another lithium ion cell included in the power storage unit.

In the present teaching, "interlayer distance" indicates the distance between neighboring layers. In the present teaching, an "average interlayer distance" indicates an average distance between neighboring layers.

In the present teaching, the phase "metal casing cells are fixed to one another" indicates a state in which plural metal casing cells are integrated in such a way that each of the metal casing cells is fixed to at least one other metal casing cell. To put it differently, plural metal casing cells are integrated as each of the metal casing cells is fixed to another metal casing cell. For example, plural metal casing cells may be integrated as neighboring metal casing cells are fixed to each other. Alternatively, for example, plural metal casing cells may be integrated as non-neighboring metal casing cells are fixed to each other.

In the present teaching, an "electrolyte solution" is arranged such that an electrolyte is dissolved in a solvent, and is liquid in each cell. The electrolyte dissolved in the solvent does not include a solid electrolyte. The "solid electrolyte" is an electrolyte which is in a gel state or a solid state in each cell.

In the present teaching, the term "ground" does not presuppose the existence of soil. In the present teaching, when "a charging apparatus is fixed to the ground", for example, the charging apparatus may be fixed to a base (foundation) which is formed by concrete and embedded in the ground.

In the present teaching, the term "land surface" does not presuppose the existence of soil. A "land surface" may be an asphalt-paved surface, for example. The "land surface" is primarily a surface defining altitude (above sea level). In the present teaching, when "at least part of each of the lithium ion cells is provided below a land surface in a vertical direction", "at least part of each of the lithium ion cells" is provided below a land surface around "at least part of each of the lithium ion cells".

In the present teaching and the specification, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

The number of charging apparatuses of the present teaching is not limited in the claims. Even if an element is expressed in a singular form, plural elements may be included. The number of charging apparatuses of the present teaching is not limited in the claims. Only one element expressed in a singular form may be included.

In the present teaching, terms "including", "comprising", "having", and derivatives thereof are used to encompass not only listed items and equivalents thereof but also additional items.

In the present teaching, the terms "mounted", "connected", "coupled", and "supported" are used in broad sense. To be more specific, the terms encompass not only directly mounting, connection, coupling, and supporting, but also indirect mounting, connection, coupling, and supporting. Furthermore, the terms "connected" and "coupled" do not merely indicate physical or mechanical connection and coupling. These terms encompass direct or indirect electric connection and coupling.

Unless otherwise defined, all terms (technical and scientific terms) used in this specification indicate meanings typically understood by a person with ordinary skill in the art in the technical field to which the present teaching belongs. Terms defined in typical dictionaries indicate meanings used in related technologies and in the context of the present disclosure. The terms are not interpreted ideally or excessively formal.

In this specification, the term "preferable" is non-exclusive. The term "preferable" means "preferable but not limited to". In this specification, an arrangement which is "preferable" exerts at least the above-described effects of the arrangement (1) above. In this specification, the term "may" is non-exclusive. The term "may" indicates "may but not must". In this specification, an arrangement which is explained by using the term "may" exerts at least the above-described effects of the arrangement (1) above.

In the present teaching, the preferred arrangements of the different aspects described above may be variously combined. Before an embodiment of the present teaching is detailed, it is informed that the present teaching is not limited to the configurations and layout of elements described below and/or shown in drawings. The present teaching may be implemented as an embodiment other than the below-described embodiment. The present teaching may be implemented as an embodiment other than the below-described embodiment. Furthermore, the present teaching may be implemented by suitably combining below-described modifications.

### [Advantageous Effects]

Plural external power storage apparatuses are quickly charged simultaneously, plural external power storage apparatuses are quickly and successively charged, and the degree of freedom in the installation location of a charging apparatus is high.

### [Brief Description of Drawings]

[FIG. 1] FIG. 1 illustrates a schematic diagram which outlines a charging apparatus of an embodiment of the present teaching.
[FIG. 2] FIG. 2 illustrates a schematic diagram which outlines a charging apparatus of a specific example of the embodiment of the present teaching.
[FIG. 3] FIG. 3 is a circuit diagram of lithium ion cells included in a power storage unit.
[FIG. 4] FIG. 4 illustrates a perspective view showing the internal structure of the lithium ion cell.
[FIG. 5] FIG. 5 illustrates a model diagram of the lithium ion cell.
[FIG. 6] FIG. 6 is an exploded perspective view of the power storage unit.
[FIG. 7] FIG. 7 illustrates a state in which each of the lithium ion cells is provided below the land surface in the vertical direction.
[FIG. 8] FIG. 8 illustrates a temperature adjuster of the power storage unit.
[FIG. 9] FIG. 9 is a flow chart of a charging process executed by a control unit.
[FIG. 10] FIG. 10 is a flow chart of an electric power output process executed by the control unit.
[FIG. 11] FIG. 11 is a circuit diagram of lithium ion cells included in a power storage unit of a charging apparatus of a modification of the embodiment of the present teaching.
[FIG. 12] FIG. 12 is a graph indicating discharging characteristics of a lithium ion cell under an environment of 25 degrees centigrade.
[FIG. 13] FIG. 13 is a graph indicating initial capacity ratios of lithium ion cells when the lithium ion cells are stored under an environment of 45 degrees centigrade, under an environment of 60 degrees centigrade, and under an environment of 80 degrees centigrade.
[FIG. 14] FIG. 14 is a graph indicating the initial capacity ratio of a lithium ion cell after charging and discharging are repeated under an environment of 45 degrees centigrade.
[FIG. 15] FIG. 15 is a graph indicating the initial capacity ratio of a lithium ion cell after charging and discharging are repeated under an environment of 45 degrees centigrade, and shows the initial capacity ratio of a lithium ion cell of an example of the present teaching and the initial capacity ratio of a lithium ion cell of a comparative example.

### [Description of Embodiments]

### <Embodiment of Present Teaching>

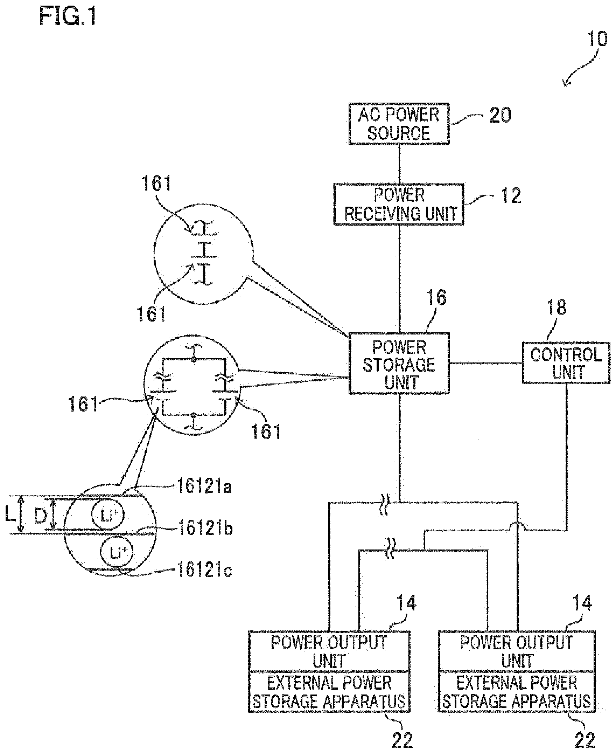

The following will describe a charging apparatus 10 of an embodiment of the present teaching with reference to FIG. 1. The charging apparatus 10 includes a power receiving unit 12, power output units 14, a power storage unit 16, and a control unit 18. The power storage unit 16 includes lithium ion cells 161 connected in series and in parallel.

The power receiving unit 12 is electrically connectable to an AC power source 20. The power receiving unit 12 receives electric power from the AC power source 20.

The power output units 14 are electrically connectable to respective external power storage apparatuses 22, which are able to store electric power. When the power output units 14 are connected to the respective external power storage apparatuses 22, the power output units 14 are able to simultaneously supply the electric power stored in the lithium ion cells 161 to the plural external power storage apparatuses 22.

At least two of the lithium ion cells 161 of the power storage unit 16 are connected in series. At least two of the lithium ion cells 161 of the power storage unit 16 are connected in parallel. The power storage unit 16 is configured to charge the lithium ion cells 161 by the electric power received by the power receiving unit 12.

Each of the lithium ion cells 161 includes one cathode (positive electrode) including a cathode active material (positive electrode active material) which has an olivine structure and one anode (negative electrode) including an anode active material (negative electrode active material) which has carbon layers 16121a, 16121b, and 16121c in which an average interlayer distance between the carbon layers is equal to or longer than the diameter of a lithium atom. FIG. 1 shows a case where a lithium atom exists between two neighboring carbon layers 16121a and 16121b. FIG. 1 shows a case where a lithium atom exists between two neighboring carbon layers 16121b and 16121c. In FIG. 1, the diameter of the lithium atom is denoted as D. Furthermore, the distance between two neighboring carbon layers 16121a and 16121b is denoted as L. FIG. 1 shows a case where the distance L between two neighboring carbon layers 16121a and 16121b is longer than the diameter D of the lithium atom. The distance between two neighboring carbon layers 16121a and 16121b may be termed the interlayer distance between two neighboring carbon layers 16121a and 16121b.

The control unit 18 is configured to charge the lithium ion cells 161 by supplying the electric power that the power receiving unit 12 receives from the AC power source 20 to the lithium ion cells 161, and output the electric power stored in the lithium ion cells 161 from at least one power output unit 14 connected to an external power storage apparatus 22 among the power output units 14.

Because the cathode of each lithium ion cell 161 includes the cathode active material having the olivine structure, the output current of the lithium ion cell 161 is large. The output current of the power storage unit 16 can be further increased by connecting lithium ion cells 161 in parallel. Furthermore, the output voltage of the power storage unit 16 can be easily increased by connecting lithium ion cells 161 in series. The power storage unit 16 including the lithium ion cells 161 connected in series and in parallel can therefore store a large amount of electric power. The power storage unit 16 is charged with the electric power that the power receiving unit 12 receives from the AC power source. The power storage unit 16 is therefore able to store a large amount of electric power that the power receiving unit 12 receives from the AC power source 20. On this account, it is unnecessary to provide the charging apparatus 10 in the vicinity of a power supply facility which is capable of supplying a large amount of electric power. The degree of freedom in installation location of the charging apparatus 10 is therefore improved. Furthermore, because the cathode of each lithium ion cell 161 includes the cathode active material having the olivine structure, the lithium ion cell 161 is less likely to be deteriorated even after charging and discharging are repeated.

The power receiving unit 12 is electrically connected to the AC power source 20. The power receiving unit 12 receives electric power from the AC power source 20. The AC power source 20 is, for example, a commercial power source to which an alternating current is supplied from a power station via a cable. Commercial power sources are available at many locations. The degree of freedom in installation location of the charging apparatus is therefore improved. The AC power source 20 may be a movable AC power generator, for example. The AC power source 20 may be connected to a movable AC power generator, for example. The degree of freedom in installation location of the charging apparatus 10 is also improved in these cases.

The control unit 18 is configured to charge the lithium ion cells 161 by supplying the electric power that the power receiving unit 12 receives from the AC power source 20 to the lithium ion cells 161, and output the electric power stored in the lithium ion cells 161 from a power output unit 14 to an external power storage apparatus 22 connected to the power output unit 14. In short, charging and discharging of the lithium ion cells 161 are controlled by the control unit 18. When the lithium ion cell 161 is charged, lithium ions move from the cathode to the anode, and enter the space between neighboring carbon layers (e.g., the space between neighboring carbon layers 16121a and 16121b and the space between neighboring carbon layers 16121b and 16121c). Meanwhile, when the lithium ion cell 161 is discharged, lithium ions leave the space between neighboring carbon layers (e.g., the space between neighboring carbon layers 16121a and 16121b and the space between neighboring carbon layers 16121b and 16121c) and move from the anode to cathode.

The anode of the lithium ion cell 161 includes the anode active material having the carbon layers 16121a, 16121b, and 16121c. An average interlayer distance between the carbon layers is equal to or longer than the diameter of a lithium atom. On this account, when the lithium ion cell 161 is charged, even though lithium ions enter the space between neighboring carbon layers (e.g., the space between neighboring carbon layers 16121a and 16121b and the space between neighboring carbon layers 16121b and 16121c), the space between the neighboring carbon layers is scarcely widened. Furthermore, when the lithium ion cell 161 is discharged, even though lithium ions leave the space between neighboring carbon layers (e.g., the space between neighboring carbon layers 16121a and 16121b and the space between neighboring carbon layers 16121b and 16121c), the interlayer distance between the neighboring carbon layers is not changed so much. In short, the average interlayer distance between the carbon layers is scarcely changed even though lithium ions enter and leave the space between the carbon layers when the lithium ion cell 161 is charged and discharged. The state of lamination of the carbon layers 16121a, 16121b, and 16121c is therefore scarcely changed. As a result, the crystalline structure of the anode is not changed so much. The lithium ion cell 161 is therefore less likely to be deteriorated even after charging and discharging of the lithium ion cell 161 are repeated.

When the output current of the lithium ion cell 161 is large, the variation width of the SOC of the lithium ion cell 161 is wide. In the lithium ion cell 161, the cathode active material has the olivine structure, and the anode active material includes the laminated carbon layers and an average interlayer distance of the carbon layers is equal to or longer than the diameter of a lithium atom. On this account, the lithium ion cell 161 is less likely to be deteriorated even in the state that the variation width of the SOC of the lithium ion cell 161 is wide. Furthermore, because the lithium ion cell 161 is less likely to be deteriorated even after charging and discharging are repeated as described above, plural external power storage apparatuses 22 can be quickly charged simultaneously and plural external power storage apparatuses 22 can be quickly charged successively. Furthermore, because increase in number of lithium ion cells in the power storage unit 16 is suppressed, increase in weight and volume is suppressed. The charging apparatus 10 can therefore be easily installed.

As described above, the charging apparatus 10 is able to quickly charge plural external power storage apparatuses 22 simultaneously and quickly charge plural external power storage apparatuses 22 successively, and the charging apparatus 10 is less restricted in installation location.

### <Specific Example of Embodiment of Present Teaching>

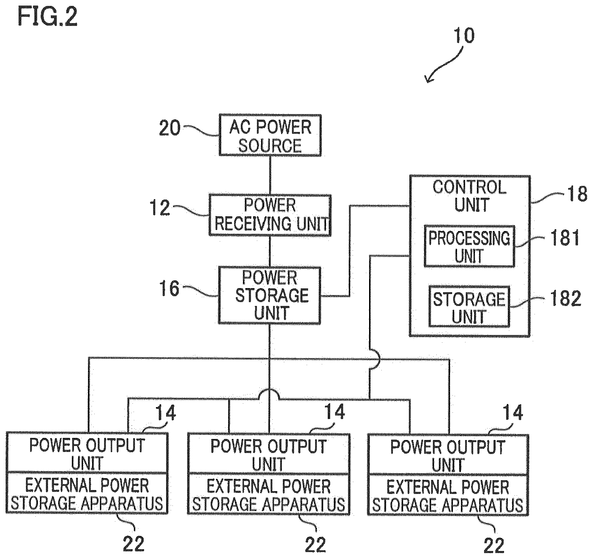

The following will describe a charging apparatus 10 of a specific example of the embodiment of the present teaching with reference to FIG. 2 to FIG. 10. Basically, the specific example of the embodiment of the present teaching encompasses all features of the embodiment of the present teaching described above. Elements identical with those in the embodiment above are indicated by the same reference numerals and the descriptions thereof are not repeated.

FIG. 2 illustrates a schematic diagram which outlines the charging apparatus 10 of the specific example of the embodiment of the present teaching. With reference to FIG. 2, the charging apparatus 10 will be described.

The charging apparatus 10 includes a power receiving unit 12, power output units 14, a power storage unit 16, and a control unit 18. FIG. 2 shows a case where the charging apparatus 10 includes three power output units 14. The following will describe this case.

The power receiving unit 12 is electrically connected to an AC power source 20. The AC power source 20 is capable of supplying an alternating current. The AC power source 20 may be a commercial power source, for example. For example, the commercial power source includes an electric outlet and a power receiving unit includes a plug. In this case, the power receiving unit is electrically connected to the AC power source as the plug of the power receiving unit is inserted into the electric outlet of the commercial power source. The AC power source may be an AC power generator, for example. The AC power source may be connected to an AC power generator, for example. The frequency and voltage of the AC power source 20 are not limited. The power receiving unit 12 may always be connected to the AC power source 20, or may be detachably connected thereto. When the power receiving unit 12 is electrically connected to the AC power source 20, the power receiving unit 12 is able to receive electric power from the AC power source 20. The power receiving unit 12 is electrically connected to the power storage unit 16. The power receiving unit 12 supplies the electric power received from the AC power source 20 to the power storage unit 16.

The power receiving unit 12 is not limited to a particular type on condition that the unit is able to receive electric power from the AC power source 20 and supply the received electric power to the power storage unit 16. For example, the power receiving unit 12 may be able to convert an alternating current supplied from the AC power source 20 to a direct current. In other words, the power receiving unit 12 may include an AC/DC converter, which is configured to convert an alternating current supplied from the AC power source 20 to a direct current. Alternatively, the power receiving unit 12 may be formed of an AC/DC converter which is configured to convert an alternating current supplied from the AC power source 20 to a direct current.

Each of the power output units 14 is electrically connectable to an external power storage apparatus 22. The external power storage apparatus 22 is capable of storing electric power. When an external power storage apparatus 22 needs to be charged, the external power storage apparatus 22 is connected to one of the power output units 14. The external power storage apparatus 22 is not limited to a particular type on condition that the apparatus is capable of storing electric power. The external power storage apparatus 22 is preferably rechargeable. The external power storage apparatus 22 may be a secondary battery, for example. The secondary battery may be a lead storage battery or a lithium ion battery. The external power storage apparatus 22 may be a capacitor or a super capacitor (ultracapacitor), for example. The super capacitor is an electric double-layer capacitor.

The plural external power storage apparatuses 22 connectable to the power output units 14 may be one type or plural types. For example, different types of external power storage apparatuses 22 are connectable to the respective power output units 14. Alternatively, one power output unit 14 may be connectable to different types of external power storage apparatuses 22. The different types of external power storage apparatuses 22 may be different in a material of a part related to electric power storage, different in charging capacity, different in discharging capacity, different in voltage when the charging rate is 100%, different in charging characteristics, or in discharging characteristics.

A state of electrical connection between the power output unit 14 and the external power storage apparatus 22 is not limited.

The power output unit 14 may be electrically connected to the external power storage apparatus 22 by physical connection. To be more specific, for example, the power output unit 14 may include a connector which is electrically and physically connected to the external power storage apparatus 22. The power output unit 14 may be electrically connected to the external power storage apparatus 22 in a non-contact state. To be more specific, for example, the power output unit 14 may include a power transmitter which is capable of supplying electric power to the external power storage apparatus 22 in a non-contact way. The power transmitter may be a power-transmitting coil. The external power storage apparatus 22 includes a power-receiving coil in this case.

The external power storage apparatus 22 is mounted on an external power consumption apparatus (not illustrated). The electric power stored in the external power storage apparatus 22 is used for driving the external power consumption apparatus. The external power consumption apparatus, on which the external power storage apparatus 22 is mounted, is not limited to any particular type. The external power storage apparatus 22 may be mounted on a consumer apparatus or an industrial apparatus, for example. The consumer apparatus may be a household electric appliance or a vehicle, for example. The vehicle may include at least one front wheel and at least one rear wheel. The vehicle may be an automobile, a motorcycle (including a scooter), a power-assisted bicycle, or an automatic tricycle, for example. The vehicle may have the external power storage apparatus 22 as the only power source, or may have the external power storage apparatus 22 and an internal combustion engine as power sources.

The external power storage apparatus 22 may be attachable and detachable to and from the external power consumption apparatus. In this case, the external power storage apparatus 22 may be connected to the power output unit 14 in a state of being detached from the external power consumption apparatus, or may be connected to the power output unit 14 in a state of being attached to the external power consumption apparatus. The external power storage apparatus 22 may not be attachable and detachable to and from the external power consumption apparatus.

The power output units 14 are electrically connected to the power storage unit 16. When any one of the power output units 14 is electrically connected to the external power storage apparatus 22, this power output unit 14 supplies the electric power stored in the power storage unit 16 to the associated external power storage apparatus 22. As a result, this external power storage apparatus 22 is charged. When plural power output units 14 are electrically connected to the external power storage apparatuses 22, respectively, the power output units 14 simultaneously supply the electric power stored in the power storage unit 16 to the associated external power storage apparatuses 22. As a result, the external power storage apparatuses 22 are simultaneously charged.

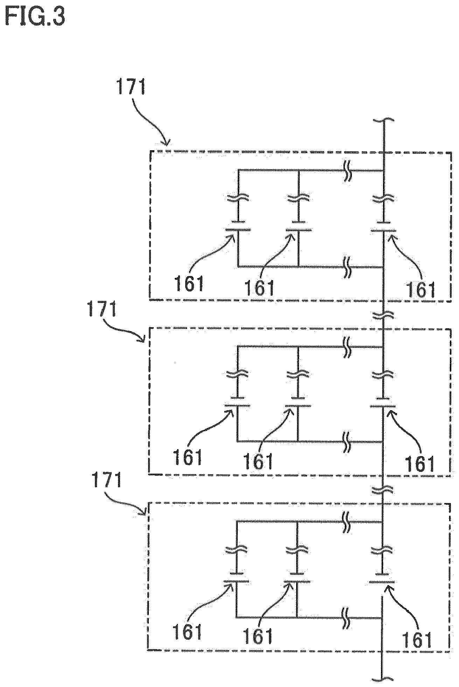

FIG. 3 shows an example of a connection state of metal casing cells 161. The metal casing cells 161 form plural parallel cell groups 171 each of which is constituted by at least two metal casing cells 161 connected in parallel. The parallel cell groups 171 are connected to each other in series. The number of metal casing cells 161 in the power storage unit 16 is not limited.

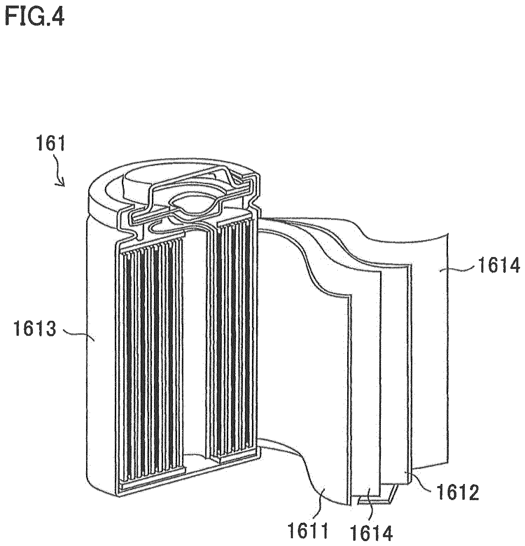

The lithium ion cells 161 are identical with one another in terms of structure. FIG. 4 illustrates a perspective view showing an example of the internal structure of the lithium ion cell 161. As shown in FIG. 4, the lithium ion cell 161 includes one cathode 1611, one anode 1612, and a casing 1613 made of metal. Hereinafter, the casing 1613 made of metal will be referred to as a metal casing 1613. Hereinafter, the lithium ion cell 161 may be referred to as a metal casing cell 161. The cathode 1611 and the anode 1612 are housed in the metal casing 1613. The metal casing 1613 is sealed. The metal casing 1613 may be made of any metal. The metal casing 1613 may be formed by a nickel-plated steel plate, for example. The metal casing 1613 is cylindrical in shape in the example shown in FIG. 4.

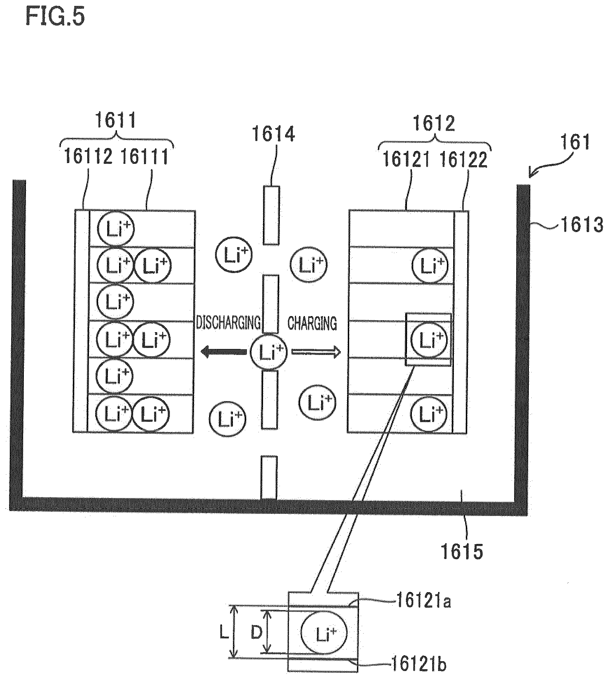

In the example shown in FIG. 4, the cathode 1611 and the anode 1612 housed in the metal casing 1613 are wound around a predetermined axis. In the example shown in FIG. 4, the predetermined axis is the central axis of the metal casing 1613. The cathode 1611, a separator 1614, the anode 1612, and a separator 1614 are layered in this order, and the cathode 1611, the separator 1614, the anode 1612, and the separator 1614 are wound around the predetermined axis. With this arrangement, the separator 1614 is provided between the cathode 1611 and the anode 1612 in the metal casing 1613. In the metal casing 1613, the cathode 1611, the anode 1612, and the separators 1614 are immersed in an electrolyte solution 1615 (see FIG. 5). As such, the metal casing 1613 houses the cathode 1611, the anode 1612, the electrolyte solution 1615, and the separator 1614.

With reference to FIG. 5, the structure of the lithium ion cell 161 will be further described. FIG. 5 illustrates a model diagram of the lithium ion cell 161.

The cathode 1611 includes a cathode active material 16111 and a collector 16112. The cathode active material 16111 has an olivine structure. The cathode active material is, for example, lithium iron phosphate or lithium manganese phosphate.

The anode 1612 includes an anode active material 16121 and a collector 16122. The anode active material 16121 includes carbon layers 16121a and 16121b. The anode active material 16121 may include a substance other than carbon. The anode active material may include silicon oxide. The carbon layers 16121a and 16121b may include a substance other than carbon. The anode active material 16121 may include, for example, at least one of hard carbon or soft carbon. In the anode active material 16121, an average interlayer distance between neighboring two layers (e.g., the layers 16121a and 16121b) is equal to or longer than the diameter of a lithium atom. In FIG. 5, the diameter of the lithium atom is denoted as D. Furthermore, the interlayer distance between two neighboring carbon layers 16121a and 16121b is denoted as L. FIG. 5 shows a case where the interlayer distance L between two neighboring carbon layers 16121a and 16121b is longer than the diameter D of the lithium atom.

The anode active material 16121 is produced by using a carbon source. Although the carbon source is not limited to any particular type, a compound including a large amount of carbon is preferably chosen in consideration of the yield. Examples of the compound including a large amount of carbon include petroleum-derived substances such as petroleum pitch and coke, and plant-derived substances such as coconut shell. Carbon is classified into non-graphitizing carbon (hard carbon) and graphitizing carbon (soft carbon) based on the starting material. The carbon source may be non-graphitizing carbon, graphitizing carbon, or both of non-graphitizing carbon and graphitizing carbon. As carbon is baked at a high temperature under an inert atmosphere, the carbon is graphitized. Graphite has a structure in which thin carbon layers are laminated. A thin layer in which six-membered carbon rings are two-dimensionally coupled may be called graphene. The temperature at which carbon is graphitized is about equal to or higher than 2500 degrees centigrade and equal to or lower than 3000 degrees centigrade. The higher the baking temperature is and the longer the baking time is, the shorter the distance (interlayer distance) between neighboring carbon layers is and the larger the size of the carbon layer is, i.e., the size of the crystallite is, in the laminated carbon layers. As a result, so-called crystallinity is improved. Graphite has a structure in which layers with two-dimensionally-coupled six-membered carbon rings are laminated and is crystalized so that an interlayer distance is equal to or less than 3.35 angstrom.

In the structure in which layers with two-dimensionally-coupled six-membered carbon rings are laminated, an average interlayer distance is shorter than the diameter of a lithium atom. For this reason, when an average interlayer distance between carbon layers is equal to or longer than the diameter of a lithium atom in an anode active material having plural carbon layers, this anode active material is different from graphite.

Each separator 1614 is a porous film. The separator 1614 is made of polyethylene, for example.

The electrolyte solution 1615 may be an organic electrolyte solution in which lithium salt is dissolved in an organic solvent. Examples of the organic solvent include ethylene carbonate, propylene carbonate, dimethyl carbonate, diethyl carbonate, and ethylmethyl carbonate. Examples of the lithium salt include lithium hexafluorophosphate, lithium borofluoride, and lithium perchlorate. The electrolyte solution may be gelled by adding polymer to the above-described organic electrolyte solution. Examples of the polymer include polyethylene oxide, polypropylene oxide, and polyvinylidene fluoride.

The electrolyte solution 1615 may be an electrolyte solution which is less likely to be solidified or frozen at a low temperature. For example, the electrolyte solution 1615 may be an electrolyte solution which is not frozen at 0 degree centigrade. Examples of the electrolyte solution, which is less likely to be solidified or frozen at a low temperature, include ethyl acetate, methyl acetate, and acetonitrile.

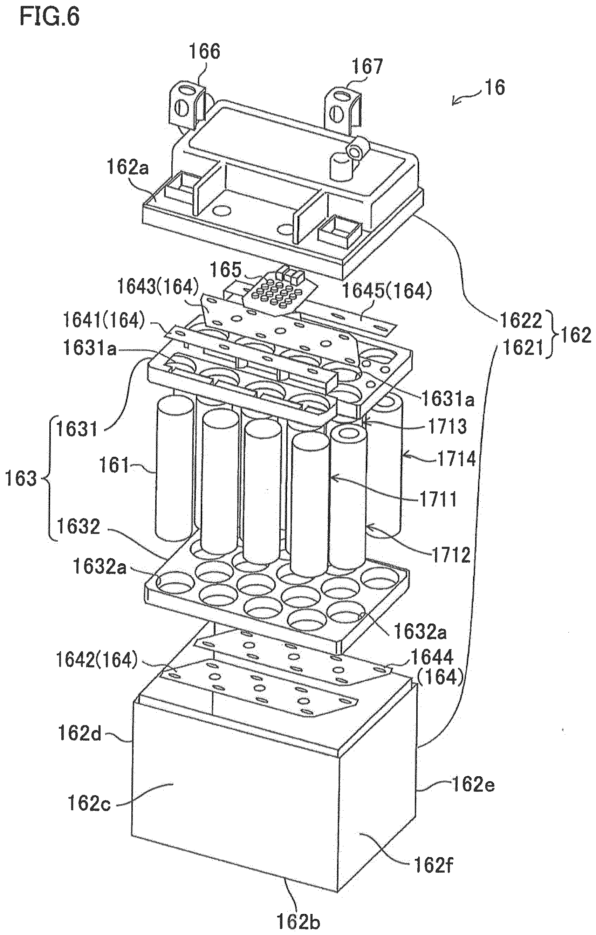

With reference to FIG. 6, the structure of an example of the power storage unit 16 will be more specifically described. FIG. 6 is an exploded perspective view of the example of the power storage unit 16. In order to show the internal structure of the power storage unit 16 in an understandable manner, FIG. 6 shows a case where the power storage unit 16 includes 16 lithium ion cells 161. The power storage unit 16 is disposed so that the up-down direction of the plane of FIG. 6 corresponds to the up-down direction (vertical direction). The structure of the power storage unit 16 will be explained based on the up-down direction of the plane of FIG. 6.

In addition to the lithium ion cells 161, the power storage unit 16 includes a housing member 162, a metal casing cell fixing unit 163, a connecting unit 164, and a balance circuit 165. The following will describe these components.

The housing member 162 includes a main body 1621 and a lid 1622. The main body 1621 and the lid 1622 are separable. The lid 1622 covers an opening formed in the main body 1621. The lid 1622 includes one external cathode terminal 166 and one external anode terminal 167. In other words, the power storage unit 16 includes one external cathode terminal 166 and one external anode terminal 167.

The housing member 162 is a box. In the example shown in FIG. 6, the housing member 162 is a substantially rectangular parallelepiped box. The housing member 162 includes a top surface 162a, a bottom surface 162b, and four side surfaces 162c, 162d, 162e, and 162f. Because the housing member 162 is substantially rectangular parallelepiped, the housing member 162 has three surfaces which are along three planes intersecting with each other. For example, the top surface 162a, the side surface 162c, and the side surface 162f are provided along three planes intersecting with each other.

The external cathode terminal 166 and the external anode terminal 167 are both provided on the top surface 162a. In other words, the external cathode terminal 166 and the external anode terminal 167 are both provided on one of the six surfaces of the housing member 162. To put it differently, the external cathode terminal 166 and the external anode terminal 167 are both provided on one of three surfaces which are along three planes intersecting with each other. The external cathode terminal 166 and the external anode terminal 167 may be provided on a surface different from the top surface 162a. The external cathode terminal 166 and the external anode terminal 167 may be provided on one of the bottom surface 162b and the four side surfaces 162c, 162d, 162e, and 162f. Because the external cathode terminal 166 and the external anode terminal 167 are provided on one surface of the housing member 162, it is easy to connect the external cathode terminal 166 and the external anode terminal 167 to any of the power receiving unit 12, the power output unit 14, and the control unit 18.

The external cathode terminal 166 and the external anode terminal 167 may be connected to any of the power receiving unit 12, the power output unit 14, and the control unit 18, in a manner described below.

For example, the external cathode terminal 166 of the power storage unit 16 may be connected to a cathode terminal of the control unit 18, and the external anode terminal 167 of the power storage unit 16 may be connected to an anode terminal of the control unit 18. In this case, a cathode terminal of the power receiving unit 12 is connected to the cathode terminal of the control unit 18 and an anode terminal of the power receiving unit 12 is connected to the anode terminal of the control unit 18. Furthermore, the cathode terminal of the control unit 18 is connected to a cathode terminal of the power output unit 14 and the anode terminal of the control unit 18 is connected to an anode terminal of the power output unit 14.

Alternatively, in a different connection state, for example, when the cathode terminal of the power receiving unit 12 is connected to the external cathode terminal 166 of the power storage unit 16 and the anode terminal of the power receiving unit 12 is connected to the anode terminal of the control unit 18, the external cathode terminal 166 of the power storage unit 16 may be connected to the power output unit 14 and the external anode terminal 167 of the power storage unit 16 may be connected to the anode terminal of the control unit 18. In this case, the anode terminal of the control unit 18 is connected to the anode terminal of the power output unit 14, too. The state of connection of the external cathode terminal 166 and the external anode terminal 167 to any of the power receiving unit 12, the power output unit 14, and the control unit 18 may be different from the above.

The housing member 162 houses 16 lithium ion cells 161, the metal casing cell fixing unit 163, the connecting unit 164, and the balance circuit 165. Moreover, the housing member 162 houses the control unit 18 (not shown). For example, the control unit 18 may be attached to the lid 1622. The location of the control unit 18 is not limited to this.

The metal casing cell fixing unit 163 includes two metal casing cell fixing plates 1631 and 1632. The metal casing cell fixing plate 1631 is a plate member in which 16 holes 1631a are formed. The metal casing cell fixing plate 1632 is a plate member in which 16 holes 1632a are formed. The two metal casing cell fixing plates 1631 and 1632 are provided on the respective sides of the 16 lithium ion cells 161. Into the 16 holes 1631a of the metal casing cell fixing plate 1631, one end portions of the 16 lithium ion cells 161 are inserted, respectively. Into the 16 holes 1632a of the metal casing cell fixing plate 1632, the other end portions of the 16 lithium ion cells 161 are inserted, respectively. In this way, the metal casing cell fixing unit 163 fixes the 16 lithium ion cells 161 to one another. In a state in which the 16 lithium ion cells 161 are fixed to the metal casing cell fixing unit 163, a space is formed between neighboring lithium ion cells 161. The metal casing cell fixing unit 163 is not electrically connected to the lithium ion cells 161.

The 16 lithium ion cells 161 are provided to form four lines. Each line is therefore formed of four lithium ion cells 161.

Each of the four lithium ion cells 161 forming the first line is provided with a cathode terminal at its lower end portion. Each of the four lithium ion cells 161 forming the first line is provided with an anode terminal at its upper end portion.

Each of the four lithium ion cells 161 forming the second line is provided with a cathode terminal at its upper end portion. Each of the four lithium ion cells 161 forming the second line is provided with an anode terminal at its lower end portion.

Each of the four lithium ion cells 161 forming the third line is provided with a cathode terminal at its lower end portion. Each of the four lithium ion cells 161 forming the third line is provided with an anode terminal at its upper end portion.

Each of the four lithium ion cells 161 forming the fourth line is provided with a cathode terminal at its upper end portion. Each of the four lithium ion cells 161 forming the fourth line is provided with an anode terminal at its lower end portion.

The connecting unit 164 includes five connecting plates 1641, 1642, 1643, 1644, and 1645. The connecting plates 1641, 1642, 1643, 1644, and 1645 are made of a conductive substance. The connecting plate 1641 is connected to the anode terminals of the four lithium ion cells 161 forming the first line. The connecting plate 1642 is connected to the cathode terminals of the four lithium ion cells 161 forming the first line. The connecting plate 1642 is connected to the anode terminals of the four lithium ion cells 161 forming the second line. The connecting plate 1643 is connected to the cathode terminals of the four lithium ion cells 161 forming the second line. The connecting plate 1643 is connected to the anode terminals of the four lithium ion cells 161 forming the third line. The connecting plate 1644 is connected to the cathode terminals of the four lithium ion cells 161 forming the third line. The connecting plate 1644 is connected to the anode terminals of the four lithium ion cells 161 forming the fourth line. The connecting plate 1645 is connected to the cathode terminals of the four lithium ion cells 161 forming the fourth line.

The four lithium ion cells 161 forming the first line are connected to one another in parallel by the connecting plates 1641 and 1642. The four metal casing cells 161 of the first line connected to one another in parallel therefore constitute a parallel cell group 1711. The four lithium ion cells 161 forming the second line are connected to one another in parallel by the connecting plates 1642 and 1643. The four metal casing cells 161 of the second line connected to one another in parallel therefore constitute a parallel cell group 1712. The four lithium ion cells 161 forming the third line are connected to one another in parallel by the connecting plates 1643 and 1644. The four metal casing cells 161 of the third line connected to one another in parallel therefore constitute a parallel cell group 1713. The four lithium ion cells 161 forming the fourth line are connected to one another in parallel by the connecting plates 1644 and 1645. The four metal casing cells 161 of the fourth line connected to one another in parallel therefore constitute a parallel cell group 1714.

The four lithium ion cells 161 of the first line are connected in series to the four lithium ion cells 161 of the second line by the connecting plate 1642. To put it differently, the parallel cell group 1711 and the parallel cell group 1712 are connected in series by the connecting plate 1642. The four lithium ion cells 161 of the second line are connected in series to the four lithium ion cells 161 of the third line by the connecting plate 1643. To put it differently, the parallel cell group 1712 and the parallel cell group 1713 are connected in series by the connecting plate 1643. The four lithium ion cells 161 of the third line are connected in series to the four lithium ion cells 161 of the fourth line by the connecting plate 1644. To put it differently, the parallel cell group 1713 and the parallel cell group 1714 are connected in series by the connecting plate 1644. As a result, the four parallel cell groups 1711, 1712, 1713, and 1714 are connected to one another in series. The metal casing cell fixing unit 163 fixes the four parallel cell groups 1711, 1712, 1713, and 1714 in a state that these groups are connected in series.

The connecting plate 1641 is connected to the external anode terminal 167 via an unillustrated cable. As a result of this, the anode terminals of the four lithium ion cells 161 of the first line are electrically connected to the external anode terminal 167. The connecting plate 1645 is connected to the external cathode terminal 166 via an unillustrated cable. As a result of this, the cathode terminals of the four lithium ion cells 161 of the fourth line are electrically connected to the external cathode terminal 166.

The balance circuit 165 is configured to suppress variations in the degree of advancement of charging between the 16 lithium ion cells 161. Typically, voltages of cells may be different when the cells connected in series are charged. For this reason, the degree of advancement of charging may vary between the cells. The balance circuit 165 suppresses the variations in voltages between the lithium ion cells 161 by, for example, allowing a current on each lithium ion cell 161 to flow to a resistance. The power storage unit 16 may not include the balance circuit 165.

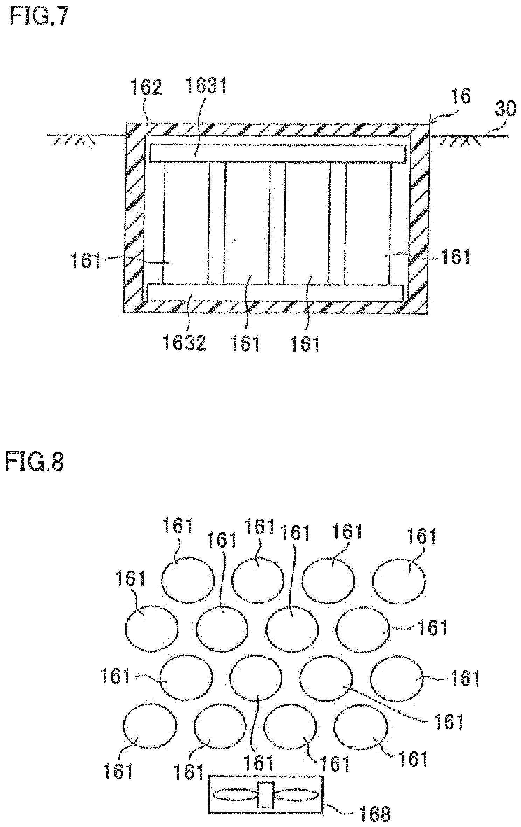

The charging apparatus 10 may be fixed to the ground, for example. For example, at least part of each of the lithium ion cells 161 may be provided below the land surface 30. For example, part of each of the lithium ion cells 161 may be provided below the land surface 30. For example, as shown in FIG. 7, all of the lithium ion cells 161 may be provided below the land surface 30.

The power storage unit 16 may include a temperature adjuster. The temperature adjuster is configured to adjust the temperature of a space formed between neighboring metal casing cells. The temperature adjuster may be a fan for air cooling. FIG. 8 shows an air cooling fan 168 as an example of the temperature adjuster.

As the air cooling fan 168 is driven, an air flow generated by the air cooling fan 168 passes through gaps formed between the lithium ion cells 161. This decreases the temperature of the air between the lithium ion cells 161. As a result, increase in temperature of the lithium ion cells 161 is suppressed.

The air cooling fan 168 may be provided inside the housing member 162, for example. The air cooling fan 168 may be provided on a side wall of the main body 1621 of the housing member 162, for example.

With reference to FIG. 2, the control unit 18 will be described.

The control unit 18 is connected to the power storage unit 16. The control unit 18 is connected to the lithium ion cells 161. The control unit 18 is connected to at least one of: a circuit connecting the lithium ion cells 161 to the power receiving unit 12; or a circuit connecting the lithium ion cells 161 to the power output units 14. The control unit 18 is configured to charge the lithium ion cells 161 by supplying the electric power that the power receiving unit 12 receives from the AC power source 20 to the lithium ion cells 161. Furthermore, the control unit 18 is configured to output the electric power stored in the lithium ion cells 161 to at least one of the power output units 14, to which the external power storage apparatus 22 is connected.

The control unit 18 includes, for example, a processing unit 181 and a storage unit 182. The processing unit 181 is, for example, a processor configured to execute a program based on information stored in the storage unit 182. The processing unit 181 is, for example, a CPU (Central Processing Unit), a GPU (Graphics Processing Unit), a microcontroller, a micro processing unit, an application specific integrated circuit (ASIC), a programmable logic circuit (PLC), or a field programmable gate array (FPGA), etc. The storage unit 182 stores plural types of data. The storage unit 182 stores information necessary for processes executed by the processing unit 181. Examples of the information necessary for processes executed by the processing unit 181 include a program and a parameter required for executing the program. The storage unit 182 incudes, for example, a RAM (Random Access Memory) and a ROM (Read Only Memory). The RAM temporarily stores data when the processing unit 181 executes a program. The ROM stores a program executed by the processing unit 181. The control unit 18 may be embodied by a computer including members such as a CPU, a RAM, a ROM, and an external storage device, for example.

The processing unit 181 executes a charging process of charging each of the lithium ion cells 161 by supplying the electric power received by the power receiving unit 12 to each of the lithium ion cells 161. Furthermore, the processing unit 181 executes an electric power output process of outputting the electric power charged in the lithium ion cells 161 from at least one of the power output units 14.

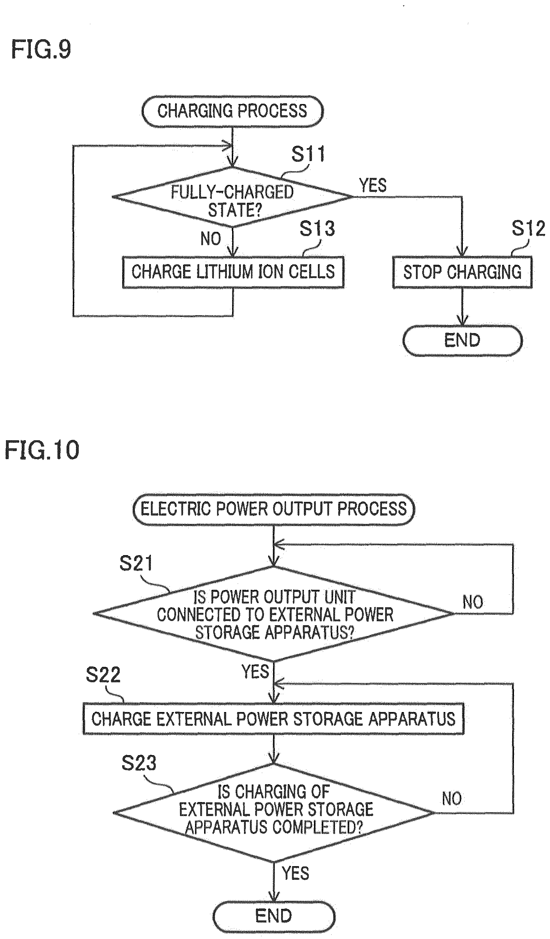

With reference to FIG. 9, the following will describe an example of the charging process executed by the control unit 18. FIG. 9 shows a flow chart of the charging process executed by the control unit 18.

In the step S11, the control unit 18 determines whether each of the lithium ion cells 161 is in a fully charged state. The fully charged state is a state in which the charging rate is 100%. The charging rate is a so-called SOC (State Of Charge). The SOC represents the ratio of an amount of electricity charged to an amount of electricity in the fully charged state of the lithium ion cell 161.

When each of the lithium ion cells 161 is in the fully charged state (YES in S11), the control unit 18 stops the supply of the electric power received by the power receiving unit 12 to each of the lithium ion cells 161 in the step S12. Thereafter, the control unit 18 stops the charging process of charging each of the lithium ion cells 161.

When each of the lithium ion cells 161 is not in the fully charged state (NO in S11), the control unit 18 supplies the electric power received by the power receiving unit 12 to each of the lithium ion cells 161 so as to charge each of the lithium ion cells 161 in the step S13. Thereafter, the control unit 18 executes the step S11 and the subsequent steps.

When at least one of the lithium ion cells 161 is not in the fully charged state (NO in S11), the control unit 18 supplies the electric power received by the power receiving unit 12 to the lithium ion cell 161 not in the fully charged state so as to charge that lithium ion cell 161 in the step S13. Thereafter, the control unit 18 executes steps the step S11 and the subsequent steps.

With reference to FIG. 10, the following will describe the electric power output process executed by the control unit 18. FIG. 10 shows a flow chart of the electric power output process executed by the control unit 18.

In the step S21, the control unit 18 determines whether at least one of the power output units 14 is connected to the external power storage apparatus 22.

When none of the power output units 14 is connected to the external power storage apparatus 22 (NO in S21), the control unit 18 waits for connection of any power output unit 14 to the external power storage apparatus 22.

When at least one of the power output units 14 is connected to the external power storage apparatus (YES in S21), the control unit 18 outputs electric power from the power output unit 14 connected to the external power storage apparatus in the step S22. As a result, the electric power is supplied to the external power storage apparatus 22 connected to the power output unit 14, and the external power storage apparatus 22 is charged.

Subsequently, the control unit 18 determines whether the charging of the external power storage apparatus 22 is completed in the step S23. When the charging of the external power storage apparatus 22 is completed (YES in S23), the control unit 18 terminates the electric power output process. When the charging of the external power storage apparatus 22 is not completed (NO in S23), the control unit 18 executes the step S22 and the subsequent steps.

The specific example of the embodiment of the present teaching has the following effects in addition to the effects obtained by the above-described embodiment of the present teaching.

When the lithium ion cells 161 are charged or discharged, each of the lithium ion cells 161 radiates heat. When the plural external power storage apparatuses 22 are quickly charged simultaneously, an amount of heat generated by each lithium ion cell 161 is large because a large current is discharged from the lithium ion cells 161. Likewise, when the plural external power storage apparatuses 22 are quickly charged successively, an amount of heat generated by each lithium ion cell 161 is large because a large current is discharged from the lithium ion cells 161. Each of the lithium ion cells 161 is the metal casing cell in which the cathode 1611, the anode 1612, and the electrolyte solution 1615 are housed in the metal casing 1613. The metal casing 1613 has high heat dissipation. On this account, even though each of the lithium ion cells 161 radiates heat when the lithium ion cells 161 are charged or discharged, each of the lithium ion cells 161 dissipates the heat. It is therefore possible to suppress increase in temperature of the lithium ion cells 161 even when a large current is discharged and an amount of generated heat is large. This makes it possible to suppress the deterioration of the lithium ion cells 161. As a result, the plural external power storage apparatuses 22 can be quickly charged simultaneously and the plural external power storage apparatuses 22 can be quickly and successively charged for a longer time.

When the plural external power storage apparatuses 22 are quickly charged simultaneously, an amount of heat generated by each lithium ion cell 161 is large because a large current is discharged from the lithium ion cells 161. Likewise, when the plural external power storage apparatuses 22 are quickly charged successively, an amount of heat generated by each lithium ion cell 161 is large because a large current is discharged from the lithium ion cells 161. The suppression of increase in temperature of the power storage unit 16 by utilizing heat dissipation of the metal casing 1613 is therefore further effective.

Furthermore, because the electrolyte solution 1615 is housed in the metal casing 1613, the metal casing 1613 does not swell even when the electrolyte solution 1615 is a highly volatile electrolyte solution. It is therefore possible to use a highly volatile electrolyte solution as the electrolyte solution. Such a highly volatile electrolyte solution is less likely to be solidified or frozen at a low temperature. When the electrolyte solution is less likely to be solidified or frozen at a low temperature, the lithium ion cells 161 can be used in a low-temperature environment. This allows the lithium ion cells (metal casing cells) 161 to be used in wider environments. As a result, the degree of freedom in installation location of the charging apparatus 10 is further improved.

As the metal casing cells 161 are fixed to one another by the metal casing cell fixing unit 163, the metal casing cells 161 are maintained to be connected in series and in parallel. Furthermore, the metal casing cells 161 can be integrated. This makes it easy to move the metal casing cells 161 together. As a result, the power storage unit 16 can be handled more easily. As a result, the degree of freedom in installation location of the charging apparatus 10 is further improved.

In addition to the above, by the metal casing cell fixing unit 163, the positions of the metal casing cells 161 are maintained with a layout which takes account of the heat dissipation of the metal casing cells 161. For example, the metal casing cells 161 can be maintained with a suitable gap therebetween. With this, when the metal casing cells 161 are charged or discharged, temperature increase of the metal casing cells 161 is suppressed even if the metal casing cells 161 radiate heat. This makes it possible to further suppress the deterioration of the metal casing cell (lithium ion cell) 161. The deterioration of the metal casing cells 161 is therefore suppressed. As a result, the plural external power storage apparatuses 22 can be quickly charged simultaneously and the plural external power storage apparatuses 22 can be quickly and successively charged for a longer time.

In addition to the above, when the metal casing cell fixing unit 163 arranges the metal casing cells to be fixed to one another while a space is formed between neighboring metal casing cells 161, heat generated when the metal casing cells 161 are charged or discharged can be transferred to this space. Furthermore, because the metal casing 1613 of the metal casing cell 161 is made of metal, the metal casing cell 161 has high heat dissipation. For these reasons, when the metal casing cells 161 are charged or discharged, temperature increase of the metal casing cells 161 is suppressed. The deterioration of the metal casing cells 161 is therefore suppressed. As a result, the plural external power storage apparatuses 22 can be quickly charged simultaneously and the plural external power storage apparatuses 22 can be quickly and successively charged for a longer time.

In addition to the above, the housing member 162 of the power storage unit 16 houses the metal casing cells 161 and the metal casing cell fixing unit 163. The metal casing cells 161 are therefore protected from water and moisture. This makes it possible to suppress the deterioration of the metal casing cell (lithium ion cell) 161. As a result, the degree of freedom in installation location of the charging apparatus 10 is further improved.

In addition to the above, because the housing member 162 houses the metal casing cells 161 and the metal casing cell fixing unit 163, it is easy to move the metal casing cells 161 and the metal casing cell fixing unit 163 together. As a result, the power storage unit 16 can be handled easily. The degree of freedom in installation location of the charging apparatus 10 is therefore further improved. Furthermore, because the housing member 162 houses the balance circuit 165 and the control unit 18, it is easy to move the lithium ion cells 161, the metal casing cell fixing unit 163, the balance circuit 165, and the control unit 18 together. As a result, the power storage unit 16 can be handled more easily. The degree of freedom in installation location of the charging apparatus 10 is therefore further improved.

When the lithium ion cells 161 are housed in the housing member 162, heat of the metal casing cells 161 does not easily escape to the outside. On this account, if no temperature adjuster is provided, it would be difficult to suppress the temperature increase of the metal casing cells 161. The temperature inside the housing member tends to increase for this reason. In this regard, when the temperature adjuster such as the air cooling fan 168 is provided inside the housing member 162, the temperature increase of the lithium ion cells 161 is suppressed and the temperature inside the housing member 162 housing the lithium ion cells 161 is lowered by the temperature adjuster. It is therefore possible to suppress an influence of the temperature increase inside the housing member 162 on the balance circuit 165, etc. housed in the housing member. Deterioration, etc. of the members such as the balance circuit 165 housed in the housing member 162 due to the temperature increase can be avoided.

As a result, the plural external power storage apparatuses 22 can be quickly charged simultaneously and the plural external power storage apparatuses 22 can be quickly and successively charged for a longer time.

Underground temperature does not change so much as compared to overground temperature. Furthermore, underground temperature is less likely to be extremely high or low as compared to overground temperature. When at least part of each of the lithium ion cells 161 is provided below the land surface 30, the part of each of the lithium ion cells 161 under the ground is less susceptible to an influence of ambient temperatures. This makes it possible to suppress the deterioration of the lithium ion cells 161. On this account, the charging apparatus 10 is able to quickly charge the plural external power storage apparatuses 22 simultaneously and able to quickly charge the plural external power storage apparatuses 22 successively for a longer time. When each of the lithium ion cells 161 is provided entirely below the land surface 30, the lithium ion cells 161 are less susceptible to an influence of ambient temperatures as compared to cases where part of each of the lithium ion cells 161 is below the land surface 30. This makes it possible to further suppress the deterioration of the lithium ion cells 161.

### <Modifications of the Embodiment of the Present Teaching>

The present teaching is not limited to the above-described embodiment and its specific example, and various changes can be made within the scope of the claims. The following describes modifications of the embodiment of the present teaching. Components having the same structure as those described above will be given the same reference numerals, and the description thereof will be omitted, if appropriate. The embodiment and the specific example of the embodiment described above and the below-described modifications may be used in combination as needed.

### Modification of the Connection State of Lithium Ion Cells

In the power storage unit 16 of the specific example of the embodiment above, parallel cell groups each constituted by at least two lithium ion cells 161 connected in parallel are connected in series, as a state of connection of the lithium ion cells 161 in series and in parallel. However, the connection state of the lithium ion cells in the present teaching is not limited to this state. The connection state of the lithium ion cells in the present teaching may be variously modified on the condition that the lithium ion cells 161 are connected in series and in parallel. When the lithium ion cells of the present teaching form plural parallel cell groups, the number of the parallel cell groups is not limited.

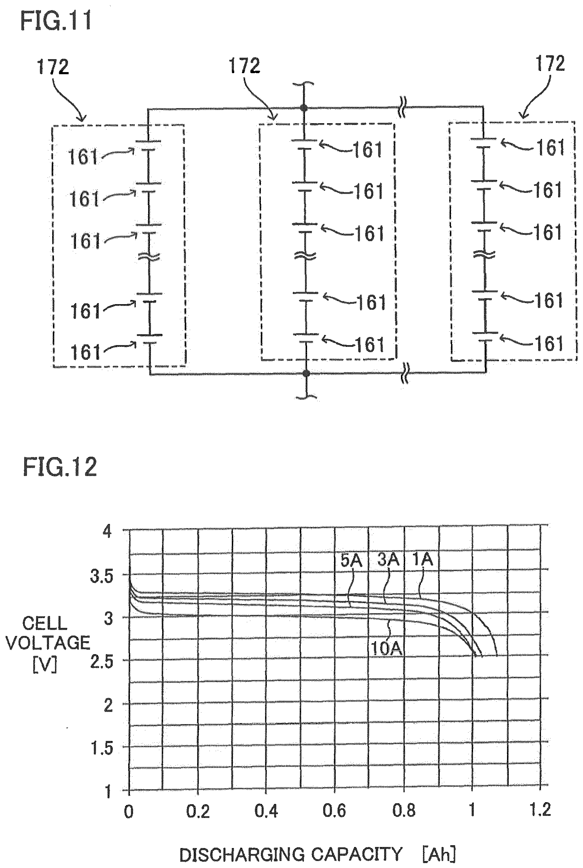

The connection state of the lithium ion cells in the present teaching may be arranged such that series cell groups, each of which is constituted by at least two lithium ion cells connected in series, are connected in parallel. An example of this connection state is shown in FIG. 11. The reference symbol 172 in FIG. 11 indicates series cell groups. When the lithium ion cells of the present teaching form plural series cell group, the number of the series cell groups is not limited.

The connection state of the lithium ion cells in the present teaching may be arranged such that series parallel groups, in each of which series cell groups each of which is constituted by at least two lithium ion cells connected in series are connected in parallel are connected in series.

The connection state of the lithium ion cells in the present teaching may be arranged such that parallel series groups in each of which parallel cell groups each of which is constituted by at least two lithium ion cells connected in parallel are connected in series are connected in parallel. The connection state of the lithium ion cells in the present teaching may be arranged such that parallel-parallel groups in each of which parallel cell groups each of which is constituted by at least two lithium ion cells connected in parallel are connected in parallel are connected in series. The lithium ion cells may include a lithium ion cell which is connected only in series to at least one of the remaining lithium ion cells included in the power storage unit. The lithium ion cells may include a lithium ion cell which is connected only in parallel to at least one of the remaining lithium ion cells included in the power storage unit.

In regard to the connection state of the lithium ion cells of the present teaching, the number of lithium ion cells connected in series is not limited. In regard to the connection state of the lithium ion cells of the present teaching, the number of lithium ion cells connected in parallel is not limited.

In regard to the connection state of the lithium ion cells of the present teaching, the number of lithium ion cells connected in series may be identical or different between groups. For example, when the lithium ion cells include lithium ion cells which are divided into two series cell groups, the number of the lithium ion cells constituting the first series cell group may be identical with or different from the number of the lithium ion cells constituting the second series cell group.

In regard to the connection state of the lithium ion cells of the present teaching, the number of lithium ion cells connected in parallel may be identical or different between groups. For example, when the lithium ion cells include lithium ion cells, which are divided into two parallel cell groups, the number of the lithium ion cells constituting the first parallel cell group may be identical with or different from the number of the lithium ion cells constituting the second parallel cell group.

### Modification of Metal Casing Fixing Unit

The power storage unit 16 of the specific example of the embodiment above includes the metal casing cell fixing unit 163. In the present teaching, the power storage unit may not include the metal casing cell fixing unit. The metal casing cells may not be fixed to one another by the metal casing cell fixing unit. The metal casing cells may be housed in the housing member without being fixed to one another by the metal casing cell fixing unit.

The metal casing cell fixing unit 163 of the specific example of the embodiment above includes two metal casing cell fixing plates 1631 and 1632. The arrangement of the metal casing cell fixing unit, however, is not limited to this arrangement. For example, the metal casing cell fixing unit may be constituted by a single plate member. The metal casing cell fixing unit may be constituted by only one of the metal casing cell fixing plates 1631 and 1632. Alternatively, the metal casing cell fixing unit may be constituted by two or more plate members. The metal casing cell fixing unit may not be a plate member.

In the specific example of the embodiment above, one end portions of the lithium ion cells 161 are inserted into 16 holes 1631a of the metal casing cell fixing plate 1631, respectively. Into the 16 holes 1632a of the metal casing cell fixing plate 1632, the other end portions of the lithium ion cells 161 are inserted, respectively. With this arrangement, the lithium ion cells 161 are fixed to one another. However, the way of fixing the lithium ion cells to one another by the metal casing cell fixing unit is not limited to this. For example, the metal casing cells may be fixed to one another in such a way that the metal casing cells are fitted into grooves (concave portions) formed in the metal casing cell fixing unit.

In the specific example of the embodiment above, the metal casing cells 161 are fixed to one another while a space is formed between neighboring metal casing cells 161. However, in the present teaching, the way of fixing the metal casing cells to one another by the metal casing cell fixing unit is not limited to this. The metal casing cells may be fixed to one another while no space is formed between at least two metal casing cells among the metal casing cells.

In the specific example of the embodiment above, the metal casing cell fixing unit 163 is not electrically connected to the metal casing cells. In the present teaching, alternatively, the metal casing cell fixing unit may additionally function as a connecting unit which electrically connects the metal casing cell to one another. The number of components can be reduced with this arrangement. As a result, the power storage unit can be reduced in weight and size. Meanwhile, when the metal casing cell fixing unit is provided independent from the connecting unit, the connecting unit is electrically connected to the metal casing cells after the metal casing cells are fixed to one another by the metal casing cell fixing unit. It is therefore easy to connect the metal casing cells to the connecting unit in this case.

### Modification of Housing Member

In the power storage unit 16 of the specific example of the embodiment above, the metal casing cells 161 and the metal casing cell fixing unit 163 are housed in the housing member 162. In the present teaching, however, the power storage unit is not necessarily arranged in this way. The metal casing cells and the metal casing cell fixing member may not be housed in the housing member. At least one metal casing cell among the metal casing cells may be housed in the housing member, and the remaining metal casing cells may not be housed in the housing member. Part of the metal casing cell fixing unit may be housed in the housing member. and the remaining part of the metal casing cell fixing unit may not be housed in the housing member. The metal casing cells and the metal casing cell fixing member may be housed in plural housing members. For example, at least one metal casing cell among the metal casing cells may be housed in a first housing member, and the remaining metal casing cells may be housed in a second housing member.

In the power storage unit 16 of the specific example of the embodiment above, the control unit 18 is housed in the housing member 162. The location of the control unit, however, is not limited to this. Only part of the control unit may be housed in the housing member. The control unit may be provided outside the housing member. The control unit may be provided outside the power storage unit.

The housing member 162 of the specific example of the embodiment above includes the main body 1621 and the lid 1622. The main body 1621 and the lid 1622 are separable. In the present teaching, however, the housing member may not be arranged in this way. The main body and the lid of the housing member may not be separable. The housing member may be constituted by three or more parts.

In the specific example of the embodiment above, the housing member 162 of the power storage unit 16 is a substantially rectangular parallelepiped box. In the present teaching, the housing member of the power storage unit may be a box which is not rectangular parallelepiped but polyhedral in shape (i.e., a polyhedral box). Also in this case, the housing member has plural surfaces which are along plural planes intersecting with each other. When the box is not rectangular parallelepiped but polyhedral in shape (i.e., polyhedral box), the number of the surfaces is at least four.

### Modification of Installation Location of Charging Apparatus

In the present teaching, the charging apparatus may not be fixed to the ground. In the present teaching, the charging apparatus may be provided on the land surface. The charging apparatus may be provided on the land surface without being fixed to the ground, or may be provided on the land surface and fixed to the ground. The charging apparatus may be provided in a building without being fixed to the building. For example, the charging apparatus may be provided on a floor of a building without being fixed to the floor of the building. The charging apparatus may be fixed to a building. In this case, the charging apparatus may be fixed to the ground through the intermediary of the building. For example, the charging apparatus may be fixed to a floor of the building.

In the present teaching, the lithium ion cells may be provided above the land surface. In the present teaching, part of each of the lithium ion cells may be provided above the land surface. In the present teaching, each of the lithium ion cells may be provided entirely above the land surface.

### Modification of Structure of Lithium Ion Cells

In the present teaching, the casing 1613 made of metal is cylindrical in shape. The casing made of metal, however, is not limited to be cylindrical in shape. For example, the casing made of metal may be box-shaped (e.g., rectangular parallelepiped). For example, in a box-shaped casing made of metal, a cathode and an anode wound around a predetermined axis may be housed. The casing made of metal may be a flat board in shape. For example, in a flat-board-shaped casing made of metal, a flat cathode and a flat anode may be housed. For example, in a flat-board-shaped casing made of metal, a cathode and an anode of a lithium ion cell may be layered. For example, in a box-shaped casing made of metal, a cathode and an anode of a lithium ion cell, which are wound around a predetermined axis, may be housed.

The lithium ion cell 161 of the specific example of the embodiment above includes the casing 1613 made of metal, in which the cathode 1611, the anode 1612, and the electrolyte solution 1615 are housed. Alternatively, the lithium ion cell of the present teaching may include a casing which is made of a non-metal material and in which a cathode, an anode, and an electrolyte solution are housed. In other words, the lithium ion cell of the present teaching may not be a metal casing cell.

In the specific example of the embodiment above, each of the lithium ion cells 161 includes the cathode 1611, the anode 1612, and the electrolyte solution 1615, Alternatively, in the present teaching, the lithium ion cell may be a lithium ion cell including a cathode, an anode, and a solid electrolyte. In this case, the solid electrolyte is in contact with both the cathode and the anode. The lithium ion cell of the present teaching may be a metal casing cell in which a cathode, an anode, and a solid electrolyte are housed in a casing made of metal. The lithium ion cell of the present teaching may be a metal casing cell in which a cathode, an anode, and a solid electrolyte are housed in a casing made of a non-metal material.

In the specific example of the embodiment above, the lithium ion cells 161 are structurally identical with one another. Alternatively, in the present teaching, the lithium ion cells may include at least two lithium ion cells which are structurally different from one another. In other words, the lithium ion cells may include two or more types of lithium ion cells.

In the specific example of the embodiment above, the lithium ion cells 161 include the cathode active material of the same type. Alternatively, in the present teaching, the cathode active materials of at least two of the lithium ion cells may be different from one another. In other words, the lithium ion cells may include two or more types of cathode active materials.

In the specific example of the embodiment above, the lithium ion cells 161 include the anode active material of the same type. Alternatively, in the present teaching, the anode active materials of at least two of the lithium ion cells may be different from one another. In other words, the lithium ion cells may include two or more types of anode active materials. For example, anodes of at least two of the lithium ion cells may be different from one another in average interlayer distance of the carbon layers.

In the specific example of the embodiment above, the lithium ion cells 161 include the electrolyte solution of the same type. Alternatively, in the present teaching, the electrolyte solutions of at least two of the lithium ion cells may be different from one another. In other words, the lithium ion cells may include two or more types of electrolyte solutions. When each of the lithium ion cells includes a cathode, an anode, and a solid electrolyte, plural lithium ion cells may include the solid electrolyte of the same type. Meanwhile, the solid electrolytes of at least two of the lithium ion cells may be different from one another. In other words, the lithium ion cells may include solid electrolytes of two or more types.

Alternatively, the lithium ion cells 161 may include at least one lithium ion cell including a cathode, an anode, and an electrolyte solution and at least one lithium ion cell including a cathode, an anode, and a solid electrolyte. In this case, at least two of lithium ion cells each including a cathode, an anode, and an electrolyte solution may include electrolyte solutions of the same type or different types. Alternatively, at least two of lithium ion cells each including a cathode, an anode, and a solid electrolyte may include solid electrolytes of the same type or different types.

### [Example]

The following will describe characteristics of lithium ion cells of the charging apparatus of the present teaching in one example (hereinafter, such a lithium ion cell may be termed lithium ion cell of the example of the present teaching), with reference to FIG. 12 to FIG. 15. The lithium ion cell of the example of the present teaching is a cylindrical lithium ion cell which is 18 mm in diameter and 65.0 mm in length, i.e., a so-called 18650 cell.

### (1) Discharging Characteristics at Different Current Values

The lithium ion cell of the example of the present teaching was charged by constant current constant voltage charging. The charging current in the constant current charging was 1A. The charging voltage in the constant voltage charging was 4.2 V. The final charging current was 0.05A. After the charging is finished, the lithium ion cell of the example of the present teaching was discharged at a constant current. The discharge capacities when the discharging current in the constant current discharging was 1A, 3A, 5A, and 10A were measured. The final discharging voltage (the discharge cut off voltage) was 2.5 V. The discharging current is also termed output current.

FIG. 12 shows discharging characteristics of the lithium ion cell when the discharging current is 1A, 3A, 5A, or 10A. The vertical axis of FIG. 12 indicates a voltage of the lithium ion cell, whereas the horizontal axis of FIG. 12 indicates the discharging capacity of the lithium ion cell. It is understood from FIG. 12 that the discharging capacity is more than 1Ah when the discharging current is 1A, 3A, 5A, or 10A. This result indicates that the lithium ion cell of the example of the present teaching can be used at a high discharging rate.

### (2) Resistance to High Temperature Environment

The deterioration of the lithium ion cell of the present teaching was investigated when the lithium ion cell of the example of the present teaching was preserved in a temperature environment of 45 degrees centigrade, 60 degrees centigrade, or 80 degrees centigrade.

Before the lithium ion cell was preserved, the lithium ion cell was charged by constant current constant voltage charging under an environment of 25 degrees centigrade. The charging current in the constant current charging was 1A. The charging voltage in the constant voltage charging was 3.65 V. The final charging current was 0.05A.

After the preserving time in each temperature environment elapsed, the capacity of the lithium ion cell was measured. The results are as below.

To begin with, the lithium ion cell was charged by constant current constant voltage charging under an environment of 25 degrees centigrade. The charging current in the constant current charging was 1A. The charging voltage in the constant voltage charging was 3.65 V. The final charging current was 0.05A. After the charging was done with these conditions, constant current discharging was performed under an environment of 25 degrees centigrade, and the discharging capacity of the lithium ion battery was measured. The discharging current was 1A. The final discharging voltage was 2.5 V.

The discharging capacity of each lithium ion cell after the preservation was divided by the initial capacity of each lithium ion cell. In this way, the discharging capacity after the preservation as compared to the initial capacity of the lithium ion cell was calculated. In this disclosure, the discharging capacity after the preservation as compared to the initial capacity of the lithium ion cell is termed an initial capacity ratio.

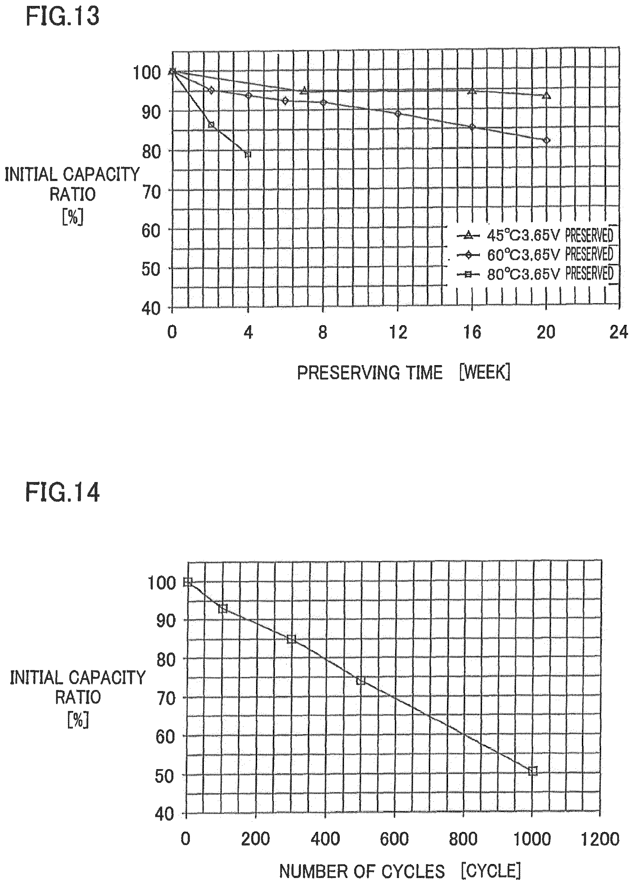

FIG. 13 shows the relationship between the initial capacity ratio and the preservation time at each preservation temperature. The vertical axis of FIG. 13 indicates the initial capacity ratio, whereas the horizontal axis of FIG. 13 indicates the preservation time. According to FIG. 13, when the lithium ion cell was preserved for 20 weeks (about 5 months) under an environment of 45 degrees centigrade, the initial capacity ratio was more than 90 %. When the lithium ion cell was preserved for 20 weeks (about 5 months) under an environment of 60 degrees centigrade, the initial capacity ratio was 82 %. When the lithium ion cell was preserved under an environment of 80 degrees centigrade, the initial capacity ratio was slightly lower than 80 % even when the preservation time was 4 weeks (about a month). The results indicate that the decrease of the battery capacity was suppressed even if the lithium ion cell of the example of the present teaching was used for a long time under a high temperature environment. In other words, it was proved that the deterioration of the lithium ion cell was suppressed even if the lithium ion cell of the example of the present teaching was used for a long time under a high temperature environment.

### (3) Cycle Characteristics under Condition with Large Variation Width of SOC

Under an environment of 45 degrees centigrade, the lithium ion cell of the example of the present teaching was repeatedly charged and discharged. To be more specific, an operation of charging the lithium ion cell of the example of the present teaching at a constant current and a constant voltage and then discharging the lithium ion cell at a constant current was repeated. The waiting time between the end of the charging and the start of the discharging was 30 minutes. The waiting time between the end of the discharging and the start of the charging was 30 minutes. The charging current in the constant current charging was 10A. The charging voltage in the constant voltage charging was 3.6 V. The final charging current was 0.05A. The discharging current in the constant current discharging was 10A. The final discharging voltage was 2.5 V. One charging and one discharging constituted one cycle. In each cycle, the discharging was done to the final discharging voltage with a 10C current. 10C indicates a current value with which the discharging is cut off in 1/10 hour in the constant current discharging.

The variation width of the SOC increases as the C rate increases. The variation width of the SOC is large when the discharging is done with the 10C current. The variation width of the SOC was large in the case above, because the discharging was done with the 10C current. In the case above, the charging and discharging of the lithium ion cell of the example of the present teaching were repeated under a condition with a large variation width of the SOC.

The 10C discharging capacity in the discharging of the first cycle and the 10C discharging capacity in the discharging of the n-th cycle were measured. The 10C discharging capacity is an amount of electricity obtained when the discharging is done to the final discharging voltage at the 10C current. By dividing the 10C discharging capacity in the discharging of the n-th cycle by the 10C discharging capacity in the discharging of the first cycle, the 10C discharging capacity in the discharging of the n-th cycle as compared to the 10C discharging capacity in the discharging of the first cycle was calculated. In this disclosure, the 10C discharging capacity in the discharging of the n-th cycle as compared to the 10C discharging capacity in the discharging of the first cycle is termed an initial capacity ratio. This initial capacity ratio may be called a capacity maintenance ratio.

FIG. 14 shows the relationship between the initial capacity ratio and the number of cycles. The vertical axis of FIG. 14 indicates the initial capacity ratio whereas the horizontal axis of FIG. 14 indicates the number of cycles. The initial capacity ratio shown in FIG. 14 is the discharging capacity ratio in a charging-discharging cycle in which charging is conducted with the 10C current and discharging is conducted with the 10C current. FIG. 14 shows that, even after the charging and discharging of the lithium ion cell of the example of the present teaching were repeated under a condition of 10C discharging with which the variation width of SOC was large, the initial capacity ratio was 50 % in the 1000th cycle. This result indicates that, in the lithium ion cell of the example of the present teaching, the decrease of the battery capacity is suppressed even after the charging and discharging are repeated under a condition with which the variation width of SOC is large. In other words, it was proved that the deterioration of the lithium ion cell of the example of the present teaching was suppressed, even after the charging and discharging were repeated under a condition with which the variation width of SOC was large.

### (4) Comparison between Example of Present Teaching and Comparative Example in Cycle Characteristics

As a comparative example, a lithium ion cell in which the cathode active material was lithium iron phosphate and the anode active material was graphite was prepared.

Under an environment of 45 degrees centigrade, the lithium ion cell of the example of the present teaching and the lithium ion cell of the comparative example were repeatedly charged and discharged. To be more specific, an operation of performing constant current discharging after performing constant current constant voltage charging was repeated. The waiting time between the end of the charging and the start of the discharging was 30 minutes. The waiting time between the end of the discharging and the start of the charging was 30 minutes. The charging current in the constant current charging was 3A. The charging voltage in the constant voltage charging was 3.6 V. The final charging current was 0.05A. The discharging current in the constant current discharging was 3A. The final discharging voltage was 2.5 V.

After the charging and discharging for a predetermined number of cycles were finished, the discharging capacity of each lithium ion cell was measured by the method described below.

To begin with, the lithium ion cell was charged by constant current constant voltage charging under an environment of 25 degrees centigrade. The charging current in the constant current charging was 1A. The charging voltage in the constant voltage charging was 3.65 V. The final charging current was 0.05A. Thereafter, constant current discharging was performed under an environment of 25 degrees centigrade, and the discharging capacity of the lithium ion cell was measured. The discharging current was 1A. The final discharging voltage was 2.5 V.

The discharging capacity in the discharging of the first cycle and the discharging capacity in the discharging were performed for the predetermined number of cycles were measured. By dividing the discharging capacity in the discharging after the predetermined number of cycles by the discharging capacity in the discharging of the first cycle, the discharging capacity in the discharging after the predetermined number of cycles as compared to the discharging capacity in the discharging of the first cycle was calculated. In this disclosure, the discharging capacity in the discharging after the predetermined number of cycles as compared to the discharging capacity in the discharging of the first cycle is termed an initial capacity ratio.

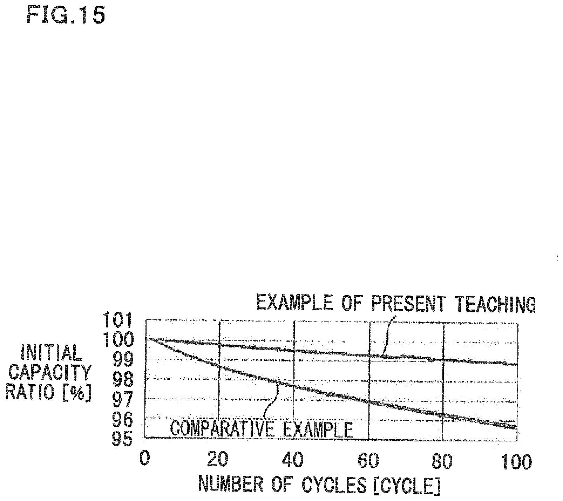

FIG. 15 shows the relationship between the initial capacity ratio and the number of cycles. The vertical axis of FIG. 15 indicates the initial capacity ratio whereas the horizontal axis of FIG. 15 indicates the number of cycles. FIG. 15 shows that, in each cycle, the initial capacity ratio of the lithium ion cell of the example of the present teaching was higher than the initial capacity ratio of the lithium ion cell of the comparative example. The initial capacity ratio of the lithium ion cell of the example of the present teaching was about 99 % in the 100th cycle. Meanwhile, the initial capacity ratio of the lithium ion cell of the comparative example was lower than about 96 % in the 100th cycle.

This result indicates that the deterioration is suppressed in the lithium ion cell of the example of the present teaching, as compared to the lithium ion cell of the comparative example.

As described above, deterioration is suppressed in the lithium ion cell of the example of the present teaching, even after the charging and discharging are repeated for a long time. On this account the charging apparatus, which employs the lithium ion cell of the example of the present teaching, is able to quickly charge the plural external power storage apparatuses simultaneously and is able to quickly charge the plural external power storage apparatuses successively.

It is noted that a power storage unit of Japanese Patent Application No. 2017-038281, which is a basic application of the subject application, is encompassed in the power storage unit disclosed in the specification of the subject application. A lithium ion battery 161 of the basic application is equivalent to the metal casing cell 161 or the lithium ion cell 161 disclosed in the specification of the subject application. A can 1613 of the basic application is equivalent to the casing 1613 made of metal or the metal casing 1613 disclosed in the specification of the subject application. A casing member 162 of the basic application is equivalent to the housing member 162 of the specification of the subject application. A battery can fixing unit 163 of the basic application is equivalent to the metal casing cell fixing unit 163 of the specification of the subject application.

### [Reference Signs List]

10 charging apparatus
12 power receiving unit
14 power output unit
16 power storage unit
161 lithium ion cell (metal casing cell)
1611 cathode
16111 cathode active material
1612 anode
16121 anode active material
16121a carbon layer
16121b carbon layer
16121c carbon layer
1613 casing made of metal (metal casing)
1615 electrolyte solution
162 housing member
162a top surface
162b bottom surface
162c side surface
162d side surface
162e side surface
162f side surface
163 metal casing cell fixing member
1631 metal casing cell fixing plate
1632 metal casing cell fixing plate
164 connecting unit
1641 connecting plate
1642 connecting plate
1643 connecting plate
1644 connecting plate
1645 connecting plate
165 balance circuit
166 external cathode terminal
167 external anode terminal
168 air cooling fan (temperature adjuster)
171 parallel cell group
1711 parallel cell group
1712 parallel cell group
1713 parallel cell group
1714 parallel cell group
172 series cell group
18 control unit
20 AC power source
22 external power storage apparatus

## Claims

1. A charging apparatus comprising:
a power receiving unit which is electrically connectable to an AC power source and is configured to receive electric power from the AC power source;
a power storage unit which includes lithium ion cells connected in series and in parallel and is configured to charge the lithium ion cells by the electric power received by the power receiving unit;
power output units which are able to simultaneously supply the electric power charged in the lithium ion cells to plural external power storage apparatuses each of which is capable of storing electric power, when the power output units are electrically connected to the external power storage apparatuses, respectively; and
a control unit which is configured to charge the lithium ion cells by supplying the electric power that the power receiving unit receives from the AC power source to the lithium ion cells, and output the electric power stored in the lithium ion cells from at least one of the power output units which is connected to at least one of the external power storage apparatuses,
each of the lithium ion cells including:
one cathode which includes a cathode active material having an olivine structure; and
one anode which includes an anode active material having laminated carbon layers, an average interlayer distance between the carbon layers being equal to or longer than the diameter of a lithium atom.

2. The charging apparatus according to claim 1, wherein,
each of the lithium ion cells is a metal casing cell including:
an electrolyte solution or a solid electrolyte; and
a casing made of metal, in which the cathode, the anode, and one of the electrolyte solution and the solid electrolyte are housed.

3. The charging apparatus according to claim 2, wherein,
the power storage unit includes
a metal casing cell fixing member which fixes the metal casing cells to one another.

4. The charging apparatus according to claim 3, wherein,
the metal casing cell fixing member fixes the metal casing cells to one another while a space is formed between neighboring metal casing cells.

5. The charging apparatus according to claim 3 or 4, wherein,
the power storage unit includes
a housing member which houses the metal casing cells and the metal casing cell fixing member.

6. The charging apparatus according to any one of claims 2 to 4, wherein,
the power storage unit includes
a temperature adjuster which is configured to adjust the temperature of the space formed between the neighboring metal casing cells.

7. The charging apparatus according to claim 5, wherein,
the power storage unit includes a temperature adjuster which is configured to adjust the temperature of the space formed between the neighboring metal casing cells, and
the temperature adjuster is provided inside the housing member.

8. The charging apparatus according to any one of claims 1 to 7, wherein,
the charging apparatus is fixed to the ground.

9. The charging apparatus according to claim 8, wherein,
at least part of each of the lithium ion cells is provided below a land surface in a vertical direction.
